# EUROPÄISCHE PATENTSCHRIFT

(11) **EP 2 018 230 B1**
(45) Veröffentlichungstag und Bekanntmachung des Hinweises auf die Patenterteilung: **16.09.2015**
(21) Anmeldenummer: 07724941.5
(22) Anmeldetag: 07.05.2007
(51) Int. Cl.: B05B 13/02, B05B 15/12

(54) **BESCHICHTUNGSANLAGE UND ZUGEHÖRIGES BETRIEBSVERFAHREN**
COATING PLANT AND ASSOCIATED OPERATING METHOD
INSTALLATION DE REVÊTEMENT ET PROCÉDÉ POUR LA FAIRE FONCTIONNER

(30) Priorität: 12.05.2006 DE 102006022335; 27.09.2006 DE 102006045642
(43) Veröffentlichungstag der Anmeldung: 28.01.2009
(73) Patentinhaber: Dürr Systems GmbH, 74321 Bietigheim-Bissingen (DE)
(72) Erfinder: HERRE, Frank, 71739 Oberriexingen (DE); SIEWERT, Uwe, 71691 Freiberg (DE); WEIHERMÜLLER, Günter, 74385 Pleidelsheim (DE)
(74) Vertreter: Heusler, Wolfgang
(86) Internationale Anmeldenummer: PCT/EP2007/004017
(87) Internationale Veröffentlichungsnummer: WO 2007/131660

(56) Entgegenhaltungen:
- DE-A1- 4 115 111
- DE-A1- 10 355 562
- JP-A- 58 223 458
- US-A- 4 770 122
- US-A- 5 575 053
- US-A- 5 743 962

## Beschreibung

Die Erfindung betrifft eine Beschichtungsanlage, insbesondere zur Lackierung von Kraftfahrzeugkarosserien.

Moderne Lackieranlagen für die Serienlackierung von Bauteilen, wie beispielsweise Automobilkarosserien und Anbauteilen, weisen in der Regel eine oder mehrere Lackierlinien auf, in denen die einzelnen Lackier- bzw. Behandlungsschritte nacheinander ausgeführt werden. Hierzu werden die zu lackierenden Bauteile entlang einem linearen Transportweg durch die Lackieranlage und die einzelnen Behandlungsstationen transportiert. Derartige Lackieranlagen arbeiten meist im Durchlaufbetrieb (engl. "Line Tracking"), bei dem die zu lackierenden Bauteile kontinuierlich entlang der Lackierlinie und dem Transportweg durch die einzelnen Behandlungsstationen transportiert werden. Es sind jedoch auch derartige Lackieranlagen bekannt, die im Taktbetrieb ("Stop and Go") arbeiten, bei dem die zu lackierenden Bauteile taktweise entlang der Lackierlinie transportiert werden. In beiden Fällen begrenzen die Bandgeschwindigkeit bzw. der Taktabstand zwischen den aufeinanderfolgenden Bauteilen maßgeblich die Kapazität der Lackieranlage.

Die gewünschte Kapazität der Lackieranlage bestimmt auch die Anzahl der hierfür erforderlichen Zerstäuber und dadurch auch die Anzahl der benötigten Lackierroboter oder -maschinen. Die Anzahl der benötigten Lackierroboter bzw. -maschinen beeinflusst wiederum die Länge der einzelnen Lackierzonen und damit auch die Länge der vollständigen Lackierlinien.

Mit zunehmender Band- bzw. Taktgeschwindigkeit müssen entsprechend mehr Lackierroboter eingesetzt werden, um das geforderte Lackierergebnis zu erreichen. Eine Vergrößerung der Anzahl von Lackierrobotern hat jedoch zur Folge, dass der Anteil der aktiven Lackierzeit abnimmt, wodurch die Effektivität der einzelnen Lackierroboter sinkt. So verschlechtert sich das Verhältnis von aktiver Nutzungsdauer zur Nebenzeit (Totzeit) der einzelnen Lackierroboter stetig mit steigender Bandgeschwindigkeit bzw. Taktfrequenz. Darüber hinaus führt eine Vergrößerung der Anzahl der Lackierroboter und damit auch der Zerstäuber zu größeren Farbverlusten pro Farbwechsel und zu beschichtendem Bauteil, was mit einer weiteren Verschlechterung der Effizienz verbunden ist.

Ein weiterer Nachteil der im Taktbetrieb arbeitenden Lackieranlagen ist die Tatsache, dass sich die Taktzeit der gesamten Lackierlinie nach dem Kraftfahrzeugmodell mit dem größten Lackieraufwand richten muss. Falls beispielsweise in einer Lackierlinie sowohl Luxuslimousinen mit einem großen Lackieraufwand als auch einfache Personenkraftwagen (PKW) mit einem geringen Lackieraufwand lackiert werden sollen, beschränken die Luxuslimousinen aufgrund ihres großen Lackieraufwands die maximal mögliche Taktfrequenz, wodurch der gesamte Lackierprozess verlangsamt wird.

Problematisch an den vorstehend beschriebenen bekannten Lackieranlagen ist auch die Sonderfarbversorgung, da alle Entnahmestellen angeschlossen werden müssen, was teuer und aufwendig ist.

Weiterhin ist zum Stand der Technik hinzuweisen auf US 5 743 962 A, DE 41 15 111 A1, DE 103 55 562 A1, JP 58 223458 A, US 4 770 122 A und US 5 575 053 A. Bei diesen bekannten Lackieranlagen müssen die einzelnen Behandlungsstationen (z.B. Lackierkabinen) jedoch individuell montiert werden, was aufwändig ist.

Der Erfindung liegt deshalb die Aufgabe zugrunde, eine entsprechend verbesserte Lackieranlage zu schaffen.

Diese Aufgabe wird durch eine erfindungsgemäße Beschichtungsanlage gelöst.

Ein Vorteil der erfindungsgemäßen Beschichtungsanlage ist die mögliche Standardisierung der Anlagentechnik, indem die einzelnen Behandlungsstationen als standardisierte Module ausgebildet sind. Auf diese Weise ist es möglich, dass eine Beschichtungsanlage von dem jeweiligen Anlagenbauer gebaut und dann vom Kunden beim Anlagenbauer besichtigt, getestet oder validiert werden kann. Die Inbetriebnahme erfolgt hierbei also nicht erst beim Kunden, sondern bereits beim Anlagenbauer, wodurch die spätere Inbetriebnahme wesentlich einfacher möglich ist.

Die verschiedenen Behandlungsstationen weisen deshalb einheitliche Außenabmessungen und einheitliche Anschlüsse für Druckluft, Beschichtungsmittel, Spülmittel, Datenleitungen, Zu- und Abluft sowie deren Aufbereitung für die Kabine und/oder Stromversorgung auf, so dass einzelne Behandlungsstationen einfach durch andere Behandlungsstationen ausgetauscht werden können.

Die Erfindung umfasst die allgemeine technische Lehre, den durch die Beschichtungsanlage führenden linearen Transportweg in mehrere parallele Zweige zu verzweigen, in denen jeweils mindestens eine der Behandlungsstationen angeordnet ist.

Der im Rahmen der Erfindung verwendete Begriff einer Behandlungsstation ist allgemein zu verstehen und betrifft beispielsweise Lackierstationen bzw. -kabinen, in denen die Beschichtungsobjekte (z.B. Kraftfahrzeugkarosserien) mit einem Beschichtungsmittel, wie beispielsweise Füller, Basislack oder Klarlack, beschichtet werden. Darüber hinaus umfasst der im Rahmen der Erfindung verwendete Begriff einer Behandlungsstation auch Trocknerstationen, in denen die Beschichtungsobjekte nach einem Beschichtungsvorgang trocknen, was beispielsweise durch eine Bestrahlung oder durch einen Plasmaofen erfolgen kann. Ferner umfasst der Begriff einer Behandlungsstation auch solche Behandlungsstationen, in denen die Beschichtungsobjekte gereinigt, entfettet, gespült, phosphatiert, passiviert, maskiert, demaskiert, kontrolliert oder repariert werden oder in denen eine Nahtabdichtung erfolgt.

Der im Rahmen der Erfindung verwendete Begriff eines Beschichtungsobjekts ist ebenfalls allgemein zu verstehen und nicht auf Kraftfahrzeugkarosserien, Kraftfahrzeugkarosserieteile oder deren Anbauteile davon beschränkt. Vielmehr eignet sich die Erfindung auch zur Beschichtung anderer Beschichtungsobjekte, wie sie aus dem Stand der Technik bekannt sind und deshalb nicht näher beschrieben werden müssen.

Weiterhin ist der im Rahmen der Erfindung verwendete Begriff von parallelen Zweigen des Transportwegs nicht auf die exakte geometrische Bedeutung beschränkt, bei der die einzelnen Zweige im geometrischen Sinne parallel zueinander ausgerichtet sind. Vielmehr bedeutet dieser Begriff lediglich, dass eine parallele Bearbeitung der Beschichtungsobjekte in den einzelnen Zweigen des Transportwegs möglich ist.

Die einzelnen Zweige des Transportwegs können deshalb beispielsweise auch von einem mittigen Verzweigungspunkt des Transportwegs im wesentlichen radial abzweigen. Hierbei besteht zum einen die Möglichkeit, dass die Beschichtungsobjekte über den mittigen Verzweigungspunkt zugeführt und dann auf die einzelnen radialen Zweige des Transportwegs verteilt werden. Es besteht jedoch alternativ auch die Möglichkeit, dass die Beschichtungsobjekte über die einzelnen radialen Zweige des Transportwegs zu dem Verzeigungspunkt gelangen und von dort weiter geleitet werden. In den einzelnen radialen Zweigen des Transportwegs kann hierbei jeweils eine beliebige Anzahl von Bearbeitungsstationen angeordnet sein, wie beispielsweise 3 oder 8 Bearbeitungsstationen.

In einem bevorzugten Ausführungsbeispiel der Erfindung ist an der einlaufseitigen Verzweigungsstelle des Transportwegs eine Weiche angeordnet, über die die Beschichtungsobjekte gezielt einem der parallelen Zweige zugeführt werden können. Dies ermöglicht vorteilhaft eine Verteilung der einzelnen Beschichtungsobjekte auf die verschiedenen Zweige.

Vorzugsweise sind die parallelen Zweige des Transportwegs auslaufseitig wieder zu einem einzigen Transportweg zusammengeführt, auf dem dann sämtliche Beschichtungsobjekte transportiert werden, die zuvor in den verschiedenen parallelen Zweigen des Transportwegs behandelt wurden.

Weiterhin ist in den parallelen Zweigen des Transportwegs vorzugsweise jeweils mindestens eine Beschichtungsstation angeordnet, in der die Beschichtungsobjekte mit einem Beschichtungsmittel beschichtet werden. Dadurch erhöht sich vorteilhaft die Flexibilität der gesamten Beschichtungsanlage, da beispielsweise Kraftfahrzeugkarosserien mit einem großen Lackieraufwand in einem Zweig lackiert werden können, wohingegen Kraftfahrzeugkarosserien mit einem kleinen Lackieraufwand in einem anderen Zweig des Transportwegs lackiert werden. Hierbei bremst die relativ lange Bearbeitungsdauer für die Kraftfahrzeugkarosserien mit dem großen Lackieraufwand nicht den gesamten Lackierprozess, da die Kraftfahrzeugkarosserien mit dem kleineren Lackieraufwand mit einer unabhängigen Taktzeit bzw. Bandgeschwindigkeit lackiert werden können.

Darüber hinaus können in den parallelen Zweigen des Transportwegs jeweils hintereinander mehrere Behandlungsstationen angeordnet sein, wie beispielsweise eine Lackierstation und eine oder mehrere Abdunststatiönen.

In einer Variante ist hierbei in den parallelen Zweigen des Transportwegs jeweils die gleiche Anzahl von Behandlungsstationen angeordnet. Dies ist sinnvoll, wenn in den parallelen Zweigen im Wesentlichen dieselben Lackierprozesse ablaufen, die sich lediglich durch die jeweils verwendete Farbe unterscheiden.

In einer anderen Variante ist in den parallelen Zweigen des Transportwegs jedoch eine unterschiedliche Anzahl von Behandlungsstationen angeordnet. Dies ist sinnvoll, wenn in den verschiedenen Zweigen unterschiedliche Lackierprozesse ablaufen sollen, die entsprechend eine unterschiedliche Anzahl von Behandlungsstationen erfordern.

In einem Ausführungsbeispiel einer erfindungsgemäßen Beschichtungsanlage befinden sich in mindestens einem der parallelen Zweige des Transportwegs in Transportrichtung hintereinander eine einlaufseitige Abdunststation, eine auslaufseitige Abdunststation und eine dazwischen angeordnete Beschichtungsstation.

Beim Betrieb dieser Beschichtungsanlage werden zwei Beschichtungsobjekte hintereinander in den betreffenden Zweig des Transportwegs transportiert, so dass sich das auslaufseitige Beschichtungsobjekt in der mittigen Beschichtungsstation befindet, während sich das einlaufseitige Beschichtungsobjekt in der einlaufseitigen Abdunststation befindet. Anschließend wird das in der Beschichtungsstation befindliche Beschichtungsobjekt mit einem Beschichtungsmittel beschichtet.

Nach dem Ende dieses Beschichtungsvorgangs werden die beiden Beschichtungsobjekte dann gemeinsam um eine Behandlungsstation in Richtung des Auslaufs transportiert, so dass sich das zuvor beschichtete Beschichtungsobjekt in der auslaufseitigen Abdunststation befindet, während das zuvor in einer Warteposition in der einlaufseitigen Abdunststation befindliche Beschichtungsobjekt nun in die mittige Beschichtungsstation transportiert wird. Anschließend wird dann auch das zweite Beschichtungsobjekt in der Beschichtungsstation mit einem Beschichtungsmittel beschichtet, während das bereits zuvor beschichtete Beschichtungsobjekt in der auslaufseitigen Abdunststation trocknet.

Nach dem Ende dieses zweiten Beschichtungsvorgangs werden dann die beiden Beschichtungsobjekte wieder auslaufseitig um eine Behandlungsstation weiter transportiert, so dass sich das erste Beschichtungsobjekt wieder in der Beschichtungsstation befindet, während sich das zuvor in der mittigen Beschichtungsstation beschichtete Beschichtungsobjekt nun in der einlaufseitigen Abdunststation befindet. In dieser Stellung trocknet dann das zweite Beschichtungsobjekt in der einlaufseitigen Abdunststation, während das erste Beschichtungsobjekt in der mittigen Beschichtungsstation erneut mit einem Beschichtungsmittel beschichtet wird.

Nach dem Abschluss dieses Beschichtungsvorgangs werden die beiden Beschichtungsobjekte dann wieder gemeinsam um eine Behandlungsstation in Richtung des Auslaufs transportiert, so dass sich das erste Beschichtungsobjekt in der auslaufseitigen Abdunststation befindet, während sich das zuvor in der einlaufseitigen Abdunststation getrocknete Beschichtungsobjekt in die mittige Beschichtungsstation transportiert wird. Anschließend wird dann auch das zweite Beschichtungsobjekt zum zweiten Mal beschichtet, während das erste Beschichtungsobjekt in der auslaufsseitigen Abdunststation trocknet.

Auf diese Weise können also in jedem Zweig des Transportwegs jeweils zwei Beschichtungsobjekte abwechselnd beschichtet werden und trocknen, was für eine hohe Effizienz der Beschichtungsanlage sorgt. Der Transportweg ermöglicht deshalb zumindest in einem der parallelen Zweige einen bidirektionalen Transport der Beschichtungsobjekte.

Weiterhin ist zu erwähnen, dass der Transportweg wahlweise einen auch als Durchlaufbetrieb (engl. "Line Tracking") oder einen auch als Taktbetrieb ("Stop and Go") bezeichneten intermittierenden Transportbetrieb ausführen kann, was an sich aus dem Stand der Technik bekannt ist und deshalb nicht weiter beschrieben werden muss.

Darüber hinaus besteht im Rahmen der Erfindung die Möglichkeit, dass der Transportweg die einzelnen Beschichtungsobjekte mit einer einheitlichen Transportgeschwindigkeit oder mit einer unterschiedlichen Transportgeschwindigkeit transportiert, wodurch die Flexibilität der erfindungsgemäßen Beschichtungsanlage wesentlich erhöht wird. Beispielsweise kann die Transportgeschwindigkeit in den parallelen Zweigen des Transportwegs unabhängig voneinander sein, so dass in einem Zweig komplizierte Beschichtungsobjekte mit einer geringen Transportgeschwindigkeit transportiert werden, während in einem anderen Zweig des Transportwegs einfache Beschichtungsobjekte mit einer hohen Transportgeschwindigkeit transportiert werden. Darüber hinaus besteht auch die Möglichkeit, dass die Transportgeschwindigkeit der einzelnen Beschichtungsobjekte völlig voneinander unabhängig ist, was auch innerhalb eines Zweigs oder vor der Verzweigung gilt. Auf diese Weise besteht beispielsweise die.Möglichkeit, dass die Transportgeschwindigkeit in einem einheitlichen Transportweg für die verschiedenen Beschichtungsobjekte variiert wird, um Lücken zwischen aufeinander folgenden Beschichtungsobjekten zu schließen oder entstehen zu lassen. Darüber hinaus kann die Taktzeit bzw. Transportgeschwindigkeit auch an den Lackieraufwand des jeweiligen Beschichtungsobjekts angepasst werden. Ferner kann die Taktzeit bzw. Transportgeschwindigkeit auch in Abhängigkeit von Modell, Lackart, Farbton, Lackhersteller, der gewünschten Lackqualität und bestimmten Qualitätsmerkmalen variiert werden. Die Erfindung ermöglicht also eine optimale Nutzung der Taktzeit pro Prozessschritt, wodurch die Kapazität der Lackieranlage erhöht werden kann.

In einem bevorzugten Ausführungsbeispiel der Erfindung ist ferner vorgesehen, dass zwischen zwei benachbarten parallelen Zweigen des Transportwegs mindestens ein Roboter angeordnet ist, der die Behandlungsstationen in den beiden benachbarten Zweigen bedient. Zum einen kann dadurch die Anzahl der erforderlichen Roboter verringert werden, da ein Roboter nicht nur eine einzige Behandlungsstation bedient, sondern die beiden benachbarten Behandlungsstationen in den beiden angrenzenden parallelen Zweigen. Zum anderen wird dadurch die Effektivität der einzelnen Roboter erhöht, da das Verhältnis von aktiver Nutzungsdauer zu inaktiver Totzeit verbessert wird.

Weiterhin besteht im Rahmen der Erfindung die Möglichkeit, dass in den verschiedenen parallelen Zweigen des Transportwegs verschiedene Beschichtungsstationen angeordnet sind, wie im Folgenden ausgeführt wird.

Beispielsweise kann in einem Zweig des Transportwegs eine Nasslack-Beschichtungsstation angeordnet sein, während in einem anderen Zweig des Transportwegs eine Pulverlack-Beschichtungsstation angeordnet ist. Auf diese Weise können in einer einzigen Lackierlinie sowohl Nasslack als auch Pulverlack appliziert werden.

Darüber hinaus besteht hierbei die Möglichkeit, dass in einem Zweig des Transportwegs eine monochromatische Beschichtungsstation angeordnet ist, die ohne Farbwechsel ausschließlich Beschichtungsmittel der am häufigsten gewünschten Farbe ("High-Runner") appliziert, während in einem anderen Zweig des Transportwegs eine multichromatische Beschichtungsstation angeordnet ist, die Beschichtungsmittel mit verschiedenen Farben appliziert. Die monochromatische Beschichtungsstation kann dann ohne Farbwechselverluste und Farbwechselverzögerungen die am häufigsten gewünschte Farbe applizieren, wobei es sich derzeit in Europa um Silber und in Asien um Weiß handelt. Trotzdem ermöglicht dieselbe Lackierlinie hierbei auch die Applikation anderer Farben in den anderen Zweigen des Transportwegs.

Weiterhin besteht im Rahmen der Erfindung die Möglichkeit, dass in einem Zweig des Transportwegs eine aktive Beschichtungsstation für einen Normalbetrieb angeordnet ist, während sich in einem anderen Zweig des Transportwegs eine inaktive Beschichtungsstation für einen Reservebetrieb befindet. Die für den Reservebetrieb vorgesehene Beschichtungsstation ermöglicht beispielsweise bei einem Ausfall einer aktiven Beschichtungsstation eine Aufrechterhaltung der Lackierkapazität der gesamten Beschichtungsanlage, indem die inaktive Beschichtungsstation an die Stelle der ausgefallenen Beschichtungsstation tritt. Darüber hinaus lässt sich die inaktive Beschichtungsstation auch für Lackierversuche unter Großserienbedingungen verwenden, um neue Lacke und Lacksysteme zu testen. Eine weitere Möglichkeit der Nutzung der inaktiven Beschichtungsstation besteht in der Verwendung als sogenannte Teach-Kabine, in der Roboter umprogrammiert werden können. Ferner besteht die Möglichkeit, Lackierprogramme in der inaktiven Beschichtungsstation über einen längeren Zeitraum von mehreren Jahren zu optimieren, um die optimierten Lackierprogramme dann auf die anderen Beschichtungsstationen zu übertragen.

Weiterhin besteht im Rahmen der Erfindung die Möglichkeit, dass in einem Zweig des Transportwegs eine Beschichtungsstation für Kraftfahrzeugkarosserien angeordnet ist, während sich in einem anderen Zweig des Transportwegs eine Beschichtungsstation für Anbauteile (z.B. Stoßfänger) befindet. Dies ermöglicht vorteilhaft eine Optimierung der einzelnen.Beschichtungsstationen im Hinblick auf die Anforderungen der jeweiligen Beschichtungsobjekte.

In einer anderen Variante der Erfindung ist in den einzelnen Zweigen des Transportwegs jeweils eine monochromatische Beschichtungsstation angeordnet, die jeweils nur Beschichtungsmittel mit einer bestimmten Farbe appliziert, wobei diesen monochromatischen Beschichtungsstationen jeweils eine monochromatische Recycling-Einrichtung zugeordnet ist, die nur das Beschichtungsmittel aus der zugehörigen Beschichtungsstation wiederverwertet. Zum einen bietet dieses monochromatische Recycling den Vorteil, dass sich das gewonnene Beschichtungsmittel aufgrund seiner monochromatischen Zusammensetzung gut für eine Wiederverwertung eignet. Zum anderen ist hierbei trotz der monochromatischen Beschichtungsstationen die Applikation verschiedener Farben möglich, indem die Beschichtungsobjekte auf die verschiedenen Zweige des Transportwegs verteilt werden, in denen sich die Beschichtungsstationen mit den gewünschten Farben befinden.

In einem Ausführungsbeispiel der Erfindung weist mindestens eine Beschichtungsstation zwei Klarlack-Lackierroboter und zwei Basislack-Lackierroboter auf, die auch als Handhabungsroboter einsetzbar sind. Bei der Applikation von Basislack wird der Klarlack-Lackierroboter nicht zur Applikation von Lack benötigt und dient dann als Handhabungsroboter, um beispielsweise Türen oder Hauben einer Kraftfahrzeugkarosserie zu öffnen. Bei der Applikation des Klarlacks wird dagegen der Basislack-Lackierroboter nicht benötigt und kann dann als Handhabungsroboter eingesetzt werden, um wiederum Türen und Hauben der lackierten Kraftfahrzeugkarosserie zu öffnen.

Vorzugsweise ist an dem Transportweg vor der Verzweigung eine zentrale Lesestelle angeordnet, um die einlaufenden Beschichtungsobjekte zu identifizieren und die nachfolgenden Behandlungsstationen sowie die Verteilung auf die verschiedenen parallelen Zweige zu steuern. Wenn die zentrale Lesestelle beispielsweise erkennt, dass auf dem Transportweg eine Kraftfahrzeugkarosserie einläuft, die mit einer häufig gewünschten Farbe ("High-Runner") lackiert werden soll, so kann diese Kraftfahrzeugkarosserie gezielt in den Zweig des Transportwegs geleitet werden, der zur Lackierung mit High-Runnern vorgesehen ist. Die zentrale Lesestelle übergibt hierbei die Daten über die einlaufenden Beschichtungsobjekte an eine zentrale Lackiersteuerung bzw. an die nachgeordneten Behandlungsstationen in den parallelen Zweigen des Transportwegs. Diese zentrale Lackiersteuerung ermöglicht vorteilhaft einen Verzicht auf zusätzliche Lesestellen in den einzelnen parallelen Zweigen des Transportwegs.

Die erfindungsgemäße Beschichtungsanlage wird also vorzugsweise durch eine zentrale Lackiersteuerung gesteuert. Hierbei ist eine rein zentrale Ausführung möglich, bei der eine zentrale Steuerungseinheit mit sämtlichen Komponenten (z.B. Lackierboxen, Abdunststationen, Förderer, etc.) verbunden ist und diese steuert. Es ist jedoch alternativ auch möglich, dass mehrere dezentrale Steuermodule vorgesehen sind, die den einzelnen Bearbeitungsstationen zugeordnet sind, wobei die dezentralen Steuermodule durch eine zentrale Steuereinheit zentral koordiniert werden. Die Funktion der zentralen Steuereinheit kann hierbei auch von einer der dezentralen Steuermodule übernommen werden.

Die Steuerung kann hierbei wahlweise entsprechend dem sogenannten "Push-Prinzip" oder entsprechend dem "Pull-Prinzip" erfolgen. Beim "Pull-Prinzip" fordern die einzelnen Lackierboxen bzw. die zugehörigen dezentralen Steuermodule von der zentralen Steuereinheit das gewünschte Beschichtungsobjekt an. Beim "Pull-Prinzip" berechnet die zentrale Steuereinheit dagegen, wie die einzelnen Beschichtungsobjekte unter Berücksichtigung von vorgegebenen Optimierungszielen optimal auf die verschiedenen Lackierboxen verteilt werden und führt die Beschichtungsobjekte dann den jeweiligen Lackierboxen zu.

Weiterhin besteht im Rahmen der Erfindung die Möglichkeit, dass die Behandlungsstationen in den parallelen Zweigen des Transportwegs eine unterschiedliche Klimatisierung aufweisen. So unterscheiden sich die optimalen Klimatisierungsbedingungen hinsichtlich Temperatur, Feuchtigkeit und Luftsinkgeschwindigkeit in Abhängigkeit von den verwendeten Lacksystemen (Füller, Basislack oder Klarlack), dem verwendeten Zerstäubertyp (Luftzerstäuber, elektrostatischer Zerstäuber oder Hochrotationszerstäuber) und dem Farbton. Die unterschiedliche Klimatisierung in den parallelen Zweigen des Transportwegs ermöglicht hierbei eine optimale Anpassung der Klimatisierung an die jeweiligen individuellen Anforderungen.

Weiterhin besteht im Rahmen der Erfindung die Möglichkeit, dass der Transportweg entlang der Lackierlinie nicht nur einmal in mehrere parallele Zweige verzweigt, sondern mehrfach hintereinander.

Vorzugsweise ist in dem Transportweg eine Trocknerstation, insbesondere eine Plasma-Trocknerstation oder eine Strahlungshärtungseinrichtung, in Transportrichtung hinter einer Beschichtungsstation angeordnet, was im Übrigen auch bei Transportwegen ohne Verzweigungen möglich ist.

Ferner besteht im Rahmen der Erfindung die Möglichkeit, dass die Behandlungsstationen in den verschiedenen parallelen Zweigen des Transportwegs einen unterschiedlichen Explosionsschutz und/oder einen unterschiedlichen Brandschutz aufweisen. So enthalten beispielsweise die derzeit verwendeten Silberlacke und andere Lacke weniger Lösungsmittel und sind deshalb weniger brand- bzw. explosionsgefährdet. Wenn nun in einem Zweig des Transportwegs nur ein solcher Lack (z.B. Silberlack) mit einer geringen Brand- bzw. Explosionsneigung appliziert wird, so muss in der zugehörigen Beschichtungsstation ein geringerer Aufwand für Brand- und Explosionsschutz betrieben werden als in den anderen Zweigen des Transportwegs, in denen verschiedene Farben appliziert werden, die auch einen höheren Lösungsmittelanteil aufweisen und deshalb stärker brand- und explosionsgefährdet sind. Im Extremfall kann in einem Zweig des Transportwegs sogar vollständig auf einen Explosions- bzw. Brandschutz verzichtet werden, wenn in diesem Zweig nur Lacke appliziert werden, die so wenig Lösemittel enthalten, dass keine Brand- bzw. Explosionsgefahr besteht.

Vorzugsweise sind die einzelnen Beschichtungsstationen als im Wesentlichen geschlossene Kabinen ausgebildet, die jeweils einen Kabineneinlauf und einen Kabinenauslauf aufweisen, wobei der Kabineneinlauf und/oder der Kabinenauslauf durch ein Tor, insbesondere durch ein Rolltor, verschließbar ist. Das Tor verhindert hierbei vorteilhaft, dass Personen über den Transportweg unbefugt in die Lackierkabine gelangen. Darüber hinaus ermöglicht ein Tor eine bessere Luftführung in der Kabine, wodurch die Lackierqualität verbessert wird.

Vorzugsweise wird das Tor zu den Lackierkabinen mit einer Schließeinrichtung gesichert, wobei die Schließeinrichtung beispielsweise durch einen Schlüssel, einen PIN-Code, einen Fingerabdruck oder eine Code-Karte bedienbar ist.

Weiterhin besteht im Rahmen der Erfindung die Möglichkeit getrennter Beschichtungsmittelversorgungen für Wasserlack einerseits und für Lösungsmittellack andererseits, wobei die beiden getrennten Beschichtungsmittelversorgungen denselben Lackierroboter oder verschiedene Lackierroboter speisen können.

In dem bevorzugten Ausführungsbeispiel der Erfindung weist die Beschichtungsanlage eine Ringleitung oder eine Sonderfarbversorgung (ggf. auch mit Molchtechnik) auf, welche die einzelnen Behandlungsstationen (z.B. Lackierkabinen) mit einem Beschichtungsmittel oder einem sonstigen Fluid versorgt, wobei die Behandlungsstationen in einer Reihe hintereinander oder nebeneinander angeordnet sind, was an sich aus dem Stand der Technik bekannt ist. Die Erfindung sieht jedoch eine neuartige Leitungsführung der Ringleitung vor, bei der die Hinleitung und die Rückleitung der Ringleitung jeweils im Wesentlichen geradlinig entlang der Reihe der Behandlungsstationen verläuft. Die Hinleitung und die Rückleitung der Ringleitung verlaufen hierbei also gegenläufig parallel zueinander, was kürzere Rohre und weniger Lack im Umlauf ermöglicht und die Investitionskosten verringert sowie die Anbindung von Sonderfarben vereinfacht.
Die Ringleitung weist hierbei in den einzelnen Behandlungsstationen jeweils einen Energiekettenausgang auf, an den eine Energiekette (auch als Kabelschlepp bezeichnet) angeschlossen werden kann, um Geräte in den einzelnen Behandlungsstationen mit dem Beschichtungsmittel oder dem sonstigen Fluid zu versorgen, was an sich aus DE 39 27 880 A1 und EP 0 842 706 A2 bekannt ist. Neuartig ist hierbei jedoch, dass der Energiekettenausgang in den einzelnen Behandlungsstationen mittig angeordnet ist und zwar bezüglich der Reihe der Behandlungsstationen und/oder bezüglich der einzelnen Behandlungsstationen mittig.

Der im Rahmen der Erfindung verwendete Begriff einer Ringleitung ist allgemein zu verstehen und umfasst beispielsweise Einrohrsysteme, Zweirohrsysteme und Dreirohrsysteme, wie sie beispielsweise aus Pavel Svejda: "Prozesse und Applikationsverfahren", Vincentz Verlag 2003, ISBN 3-87870-741-X, S. 107-111 bekannt sind. Darüber hinaus sind Ringleitungssysteme auch bekannt aus EP 1 369 182 B1.

In einem Ausführungsbeispiel der Erfindung verläuft die Hinleitung der Ringleitung dagegen mäanderförmig entlang der Reihe der Behandlungsstationen und um die einzelnen Behandlungsstationen, während die Rückleitung der Ringleitung im Wesentlichen geradlinig entlang der Reihe der Behandlungsstation verläuft.

In einem weiteren Ausführungsbeispiel der Erfindung verläuft die Hinleitung der Ringleitung dagegen im Wesentlichen geradlinig entlang der Reihe der Behandlungsstationen, während die Rückleitung der Ringleitung mäanderförmig entlang der Reihe der Behandlungsstation und um die einzelnen Behandlungsstationen verläuft.

In einer Variante der Erfindung bildet die mäanderförmige Hinleitung bzw. Rückleitung zwischen den unmittelbar benachbarten Behandlungsstationen jeweils eine Schlinge, so dass die mäanderförmige Hinleitung bzw. Rückleitung jeweils auf einer Seite der Reihe der Behandlungsstation verläuft ohne die Seite zu wechseln.

In einer anderen Variante der Erfindung wechselt die mäanderförmige Hinleitung bzw. Rückleitung dagegen zwischen den unmittelbar benachbarten Behandlungsstationen von einer Seite der Reihe der Behandlungsstation auf die gegenüberliegende Seite der Reihe der Behandlungsstation.

Aus den vorstehenden Ausführungen ist bereits ersichtlich, dass es sich bei den Behandlungsstationen vorzugsweise um Lackierkabinen handelt, die entsprechend dem Stand der Technik mehrere Bereiche aufweisen, die im Folgenden kurz beschrieben werden. Zum einen weisen die Lackierkabinen einen Lackierbereich auf, durch den die einzelnen Beschichtungsobjekte transportiert werden und in dem die Beschichtungsobjekte beschichtet werden. Über diesem Lackierbereich ist ein sogenanntes Plenum angeordnet, das einen Druckraum bildet, aus dem Frischluft von oben durch eine Filterdecke nach unten in den Lackierbereich eingeblasen wird. Weiterhin weist die Lackierkabine unter dem Lackierbereich eine sogenannte Auswaschung auf, in der das aus dem Lackierbereich kommende überschüssige Beschichtungsmittel ("Overspray") ausgewaschen wird. Alternativ möglich ist eine Trockenauswaschung mittels Filter. Derartige Trockenauswaschungen sind beispielsweise bekannt aus DE 10 2005 048 580 A1.
Schließlich weist die Lackierkabine noch einen Kabinenträger auf, der die Lackierkabine mechanisch trägt und in der Regel unter der Auswaschung angeordnet ist.
Die Erfindung umfasst auch eine neuartige Führung der Ringleitung, indem die Ringleitung mindestens teilweise durch das Plenum, die Auswaschung oder durch den Kabinenträger verläuft.

Im Rahmen des Betriebsverfahrens werden mehrere Beschichtungsobjekte entlang dem Transportweg durch die Beschichtungsanlage transportiert und in mehreren Behandlungsstationen (z.B. Lackierstation, Abdunststation, etc.) behandelt, wobei die Beschichtungsobjekte auf mehrere parallele Zweige des Transportwegs verteilt werden, in denen jeweils mindestens eine der Behandlungsstationen angeordnet ist.

Die Verteilung der Beschichtungsobjekte auf die verschiedenen parallelen Zweige des Transportwegs erfolgt vorzugsweise in

Abhängigkeit von einer für einen Lackierprozess prozessbestimmenden Größe. Im Rahmen des Betriebsverfahrens wird also vorzugsweise die prozessbestimmende Größe ermittelt und anschließend bei der Verteilung der Beschichtungsobjekte auf die verschiedenen Zweige des Transportwegs berücksichtigt. Bei der prozessbestimmenden Größe für die Verteilung der Beschichtungsobjekte kann es sich beispielsweise um den Typ (z.B. Limousine, Kombi, Coupe, Cabrio, Pickup, Van, Minivan, SUV oder Geländewagen) des zu beschichtenden Beschichtungsobjekts handeln, da beispielsweise eine Luxuskarosserie mit einem großen Lackierumfang in einem anderen Zweig lackiert werden kann als eine einfache Karosserie mit einem geringeren Lackierumfang.
Weiterhin kann es sich bei der prozessbestimmenden Größe für die Verteilung der Beschichtungsobjekte um den Lacklieferanten bzw. den jeweiligen Lack handeln. Dies ist wichtig, da es z.B. von einem Lackhersteller A eine Freigabe für einen Lackvolumenstrom von bis 450 ml/min und von einem anderen Lackhersteller B eine Freigabe bis 300 ml/min geben kann. Dies ergibt unterschiedliche Prozesszeiten für unterschiedliche Farben oder auch unterschiedliche Prozesszeiten gleicher Farbtöne unterschiedlicher Lackhersteller.

Weiterhin kann es sich bei der prozessbestimmenden Größe für die Verteilung der Beschichtungsobjekte auf die verschiedenen parallelen Zweige des Transportwegs auch um die Farbe des zu applizierenden Beschichtungsmittels handeln. So können beispielsweise häufig gewünschte Farben ("High-Runner") in einem bestimmten Zweig des Transportwegs appliziert werden, während weniger häufige Farben ("Low-Runner") in anderen Zweigen des Transportwegs appliziert werden.

Darüber hinaus kann als prozessbestimmende Größe auch die jeweilige Qualitätsanforderung an die Beschichtung berücksichtigt werden, da beispielsweise Luxuskarosserien qualitativ hochwertiger lackiert werden sollen als einfache Karosserien. In den einzelnen Zweigen des Transportwegs können also qualitativ unterschiedliche Lackierprozesse stattfinden, wobei die Beschichtungsobjekte entsprechend den jeweiligen Qualitätsanforderungen auf die zugehörigen Zweige verteilt werden.

Ferner kann es sich bei der prozessbestimmenden Größe für die Verteilung der Beschichtungsobjekte um den Typ des zu applizierenden Beschichtungsmittels handeln. So können in einer Beschichtungslinie sowohl Pulverlacke als auch wässrige Lacke appliziert werden, wobei die Beschichtungsobjekte entsprechend dem gewünschten Lacktyp auf die zugehörigen Zweige des Transportwegs verteilt werden, in denen entweder Pulverlacke oder wässrige Lacke appliziert werden.

Weiterhin besteht die Möglichkeit, dass als prozessbestimmende Größe für die Verteilung der Beschichtungsobjekte die jeweilige Explosions- bzw. Brandgefahr des zu applizierenden Beschichtungsmittels berücksichtigt wird. Falls beispielsweise ein Beschichtungsobjekt einläuft, das mit einem Beschichtungsmittel appliziert werden soll, das keine erhebliche Brand- bzw. Explosionsgefahr aufweist, so kann dieses Beschichtungsobjekt in einen Zweig des Transportwegs transportiert werden, in dem sich eine Beschichtungsstation ohne Brand- bzw. Explosionsschutz befindet. Falls dagegen ein Beschichtungsobjekt einläuft, das mit einem Beschichtungsmittel lackiert werden soll, das eine erhebliche Explosions- bzw. Brandgefahr aufweist (z.B. Klarlack), so wird dieses Beschichtungsobjekt in einen Zweig des Transportwegs transportiert, in dem sich eine Beschichtungsstation mit einem Explosions- bzw. Brandschutz befindet.

Darüber hinaus können bei der Verteilung der Beschichtungsobjekte auf die verschiedenen parallelen Zweige des Transportwegs auch beschichtungsmittelspezifische Lackierparameter berücksichtigt werden.

Ferner besteht die Möglichkeit, dass im Rahmen des Betriebsverfahrens Kraftfahrzeugkarosserien einerseits und Anbauteile andererseits auf unterschiedliche Zweige des Transportwegs verteilt werden, so dass die verschiedenen Zweige des Transportwegs und die daran angeordneten Behandlungsstationen hinsichtlich des Typs der einlaufenden Beschichtungsobjekte optimiert werden können.

Weiterhin besteht die Möglichkeit, dass häufig benötigte Farben einerseits und selten benötigte Farben andererseits in unterschiedlichen Zweigen des Transportwegs appliziert werden, so dass auch diesbezüglich eine Optimierung möglich ist. Weiterhin kann als Optimierungsziel die geforderte Sequenzreihenfolge der nachfolgenden Produktionsbereiche (wie Endmontage) herangezogen werden.

Vorzugsweise erfolgt im Rahmen des Betriebsverfahrens eine Identifikation der einlaufenden Beschichtungsobjekte an einer zentralen Lesestation vor der Verzweigung des Transportwegs, wobei die Daten der zentralen Lesestation an eine zentrale Lackiersteuerung weitergegeben werden, so dass in den einzelnen Zweigen des Transportwegs auf zusätzliche Lesestationen verzichtet werden kann. Bei der zentralen Identifikation der einlaufenden Beschichtungsobjekte wird deshalb vorzugsweise die aktuelle Uhrzeit gemessen und gespeichert, um diese im weiteren Verlauf der Lackiersteuerung berücksichtigen zu können. Die zentrale Lackiersteuerung ermittelt dann vorzugsweise laufend die aktuelle Position aller eingelaufenen Beschichtungsobjekte innerhalb der Beschichtungsanlage in Abhängigkeit von der Identifikation durch das zentrale Lesegerät und der zugehörigen Uhrzeit sowie unter Berücksichtigung von der Verteilung auf die verschiedenen Zweige des Transportwegs und die dort ablaufenden Prozessschritte.
Weiterhin besteht im Rahmen des Betriebsverfahrens die Möglichkeit, dass eine Behandlungsstation in einem Zweig des Transportwegs arbeitet und beispielsweise Lack appliziert oder ein Beschichtungsobjekt trocknet, während eine andere Behandlungsstation in einem anderen Zweig des Transportwegs montiert, demontiert, gewartet, getestet oder zu Schulungszwecken genutzt wird.

In einer Variante der Erfindung ist weiterhin vorgesehen, dass bei der Verteilung der Beschichtungsobjekte auf die einzelnen Zweige des Transportwegs der Bearbeitungsfortschritt in den einzelnen Zweigen berücksichtigt wird. Falls sich beispielsweise in einem der parallelen Zweige des Transportwegs kein Beschichtungsobjekt mehr befindet, so wird das nächste einlaufende Beschichtungsobjekt vorzugsweise diesem Zweig zugeteilt. Auf diese Weise kann verhindert werden, dass eine Lackierbox leer steht.

Weiterhin ist in einer Variante der Erfindung vorgesehen, dass die Verteilung der auf dem Transportweg einlaufenden Beschichtungsobjekte auf die einzelnen parallelen Zweige des Transportwegs in Abhängigkeit von einem oder mehreren Optimierungszielen erfolgt.

Bei diesem Optimierungsziel kann es sich beispielsweise um die Minimierung der Farbverluste bzw. Farbwechselverluste handeln. Wenn nun ein einlaufendes Beschichtungsobjekt mit einer bestimmten Farbe lackiert werden soll, so wird dieses Beschichtungsobjekt vorzugsweise dem Zweig des Transportwegs zugeteilt, in dem bereits dieselbe Farbe lackiert wurde bzw. wird, so dass in diesem Zweig kein Farbwechsel erforderlich ist und demzufolge auch keine Farbwechselverluste auftreten.

Ein anderes Optimierungsziel ist beispielsweise die Minimierung der Größe der einlaufseitigen bzw. auslaufseitigen Pufferspeicher für die Beschichtungsobjekte. So müssen die auf dem Transportweg einlaufenden Beschichtungsobjekte in dem einlaufseitigen Pufferspeicher warten, bis die gewünschte Farbe lackiert werden kann. Dei zentrale Lackiersteuerung ermittelt hierbei über eine zentrale Lesestelle die gewünschte Farbe für die hintereinander einlaufenden Beschichtungsobjekte, die dann so auf die einzelnen Zweige verteilt werden, dass die Wartezeit und damit die erforderliche Größe des einlaufseitigen Pufferspeichers minimiert wird.

Ein weiteres mögliches Optimierungsziel bei der Verteilung der Beschichtungsobjekte besteht in der Maximierung der Lackierkapazität der Beschichtungsanlage. So senkt die Reservierung eines kompletten Zweigs für die Reservierung eines High-Runners zwar vorteilhafterweise die Farbwechselverluste bei der Lackierung des High-Runners, jedoch ist die Lackierkapazität dann unter Umständen nicht optimal, wenn wenig High-Runner lackiert werden sollen. Andererseits führen häufige Farbwechsel aufgrund der erforderlichen Farbwechselzeit ebenfalls zu einer Verringerung der Lackierkapazität der gesamten Lackieranlage. Die einlaufenden Beschichtungsobjekte werden deshalb vorzugsweise so auf die einzelnen parallelen Zweige verteilt, dass die Lackierkapazität maximal ist. Ferner kann ein Optimierungsziel bei der Verteilung der einzelnen Beschichtungsobjekte darin bestehen, dass eine möglichst gleichmäßige Verteilung von verschiedenen Typen der Beschichtungsobjekte entsprechend dem Produktionsanteil des jeweiligen Typs erreicht wird.

Darüber hinaus kann die Verteilung der einlaufenden Beschichtungsobjekte auf die einzelnen parallelen Zweige des Transportwegs so optimiert werden, dass optimal auf Anforderungen aus dem einlaufseitigen Rohbau oder aus der auslaufseitigen Endmontage reagiert wird.

Ein weiteres mögliches Optimierungsziel kann darin bestehen, dass eine möglichst gute Beschichtungsqualität erreicht werden soll.

Ferner können die einlaufenden Beschichtungsobjekte so auf die parallelen Zweige des Transportwegs verteilt werden, dass die Standzeit der sogenannten Skids minimiert oder zumindest zeitlich begrenzt wird.

Schließlich ist noch ein Optimierungsziel möglich, wonach die Lagerzeit der vorgehaltenen Beschichtungsmittel minimiert oder zumindest zeitlich begrenzt wird, um ein Absetzen der Beschichtungsmittel bei längeren Lagerzeiten zu vermeiden.

Die vorstehend genannten Optimierungsziele sind teilweise untereinander unvereinbar, wie bereits vorstehend angedeutet wurde. Vorzugsweise werden den einzelnen Optimierungszielen deshalb unterschiedliche Prioritäten zugeordnet, so dass die Optimierung durch eine Software gestaffelt für die verschiedenrangigen Optimierungsziele erfolgt. Beispielsweise kann die Minimierung der Farbverluste ein vorrangiges Optimierungsziel sein, während die Maximierung der Lackierkapazität nur ein nachrangiges Optimierungsziel ist.

Weiterhin umfasst die Erfindung die Idee, dass in einer einzigen Lackierkabine nacheinander mehrere Lackierprozessschritte an demselben Beschichtungsobjekt (z.B. einer Kraftfahrzeugkaroserie) durchgeführt werden, ohne dass das Beschichtungsobjekt zwischenzeitlich weiter transportiert wird. Beispielsweise ist es möglich, dass an ein und demselben Beschichtungsobjekt in ein und derselben Lackierkabine nacheinander eine Grundierung, ein Basislack und ein Klarlack aufgetragen wird. Darüber hinaus ist es möglich, dass an ein und demselben Beschichtungsobjekt in ein und derselben Lackierkabine nacheinander eine Innenlackierung und eine Außenlackierung erfolgt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung einer erfindungsgemäßen Beschichtungsanlage mit einem Transportweg, der in mehrere parallele Zweige verzweigt, in denen sich jeweils zwei Abdunststationen und eine Lackierstation befinden,
- Figuren 2a-2f: verschiedene aufeinanderfolgende Betriebsphasen für die einzelnen Zweige des Transportwegs bei der Beschichtungsanlage gemäß Figur 1,
- Figur 3: eine Abwandlung des Ausführungsbeispiels gemäß Figur 1, bei der zwischen den benachbarten Zweigen des Transportwegs Roboter angeordnet sind, welche die Lackierstationen in den beiden jeweils angrenzenden Zweigen des Transportwegs bedienen,
- Figur 4: eine Abwandlung des Ausführungsbeispiels gemäß Figur 3, bei dem in einem Transportweg High-Runner appliziert werden, während in einem anderen Zweig des Transportwegs Low-Runner appliziert werden,
- Figur 5: eine Abwandlung des Ausführungsbeispiels gemäß Figur 1, bei dem in einigen Zweigen des Transportwegs Pulverlack appliziert wird, während in den anderen Zweigen des Transportwegs Nasslack appliziert wird,
- Figur 6: eine Abwandlung des Ausführungsbeispiels gemäß Figur 5, bei der in einigen Zweigen des Transportwegs Karosserien lackiert werden, während in einem anderen Zweig des Transportwegs nur Anbauteile lackiert werden,
- Figur 7: eine vereinfachte, stark schematisierte Darstellung einer erfindungsgemäßen Beschichtungsanlage, bei der der Transportweg hintereinander mehrere Verzweigungen aufweist,
- Figur 8: eine Lackierstation mit zwei Klarlack-Lackierrobotern und zwei Basislack-Lackierrobotern, die alle auch als Handhabungsroboter einsetzbar sind,
- Figur 9: einen Zweig einer erfindungsgemäßen Beschichtungsanlage mit einer monochromatischen Beschichtungsanlage und einer monochromatischen Recycling-Einrichtung,
- Figur 10: eine schematische Darstellung eines weiteren Ausführungsbeispiels, bei dem der Transportweg hintereinander mehrere Verzweigungen aufweist,
- Figur 11: eine Abwandlung des Ausführungsbeispiels gemäß Figur 1, bei dem in den einzelnen parallelen Zweigen des Transportwegs ein unterschiedlicher Explosionsschutz vorgesehen ist,
- Figur 12: ein weiteres Ausführungsbeispiel einer erfindungsgemäßen Beschichtungsanlage mit einem radialen Verlauf der einzelnen Zweige des Transportwegs,
- Figur 13: eine Abwandlung des Ausführungsbeispiels gemäß Figur 1 mit mehreren Plasmatrocknern.
- Figur 14A: eine neuartige Ringleitungsanordnung mit einer geradlinigen Leitungsführung
- Figur 14B: eine weitere Ringleitungsanordnung mit einer mäanderförmigen Leitungsführung, sowie
- Figur 14C: eine alternative Ringleitungsanordnung mit einer mäanderförmige Leitungsführung.

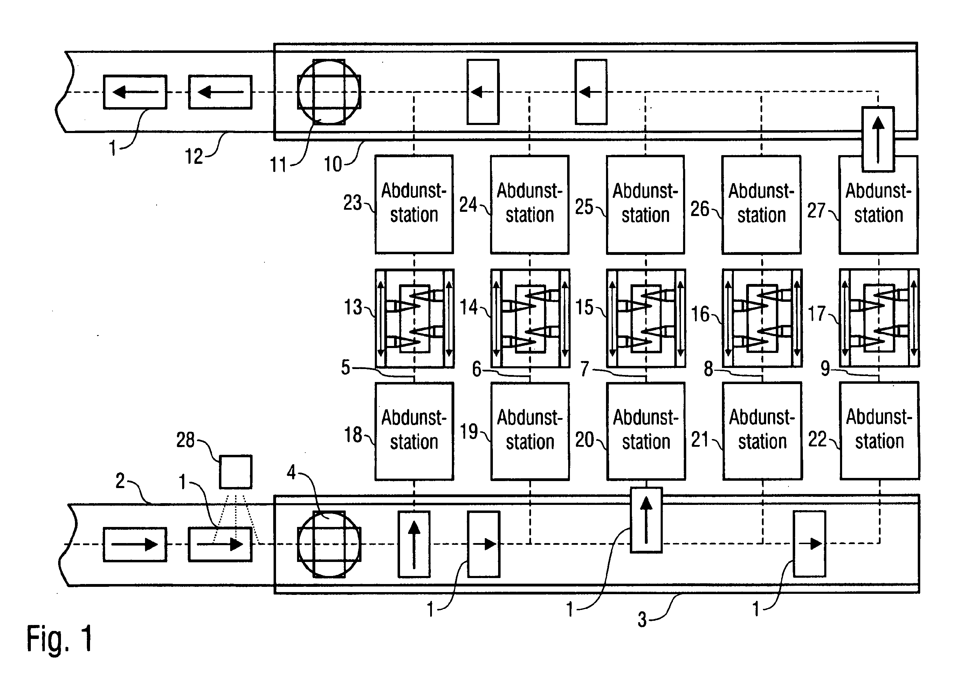

Figur 1 zeigt einen Teilbereich einer erfindungsgemäßen Lackieranlage zur Lackierung von Kraftfahrzeugkarosserien 1, wobei die Kraftfahrzeugkarosserien 1 über einen einlaufseitigen linearen Transportweg 2 zugeführt werden. Der Transportweg 2 mündet in eine Querverschiebestrecke 3, die eingangsseitig eine Drehvorrichtung 4 aufweist, welche die Kraftfahrzeugkarosserien um 90° um die Senkrechte dreht, so dass die Kraftfahrzeugkarosserien 1 auf der Querverschiebestrecke 3 rechtwinklig zu der Förderrichtung ausgerichtet sind.

Die Querverschiebestrecke 3 dient als Weiche zur Verteilung der Kraftfahrzeugkarosserien 1 auf mehrere parallele Zweige 5-9, die eine Fortsetzung des einlaufseitigen Transportwegs 2 bilden. Hierzu transportiert die Querverschiebestrecke 3 die Kraftfahrzeugkarosserien 1 vor den gewünschten Zweig 5-9, woraufhin die Kraftfahrzeugkarosserien 1 dann rechtwinklig zu der Querverschiebestrecke 3 in den gewünschten Zweig 5-9 transportiert werden.

Ausgangsseitig münden die einzelnen parallelen Zweige 5-9 des Transportwegs 2 in eine weitere Querverschiebestrecke 10, die ausgangsseitig ebenfalls eine Drehvorrichtung 11 aufweist. Die Drehvorrichtung 11 dreht die von der Querverschiebestrecke 10 zugeführten Kraftfahrzeugkarosserien 1 wieder um 90° um die Senkrechte, so dass die Kraftfahrzeugkarosserie 1 beim Verlassen der Querverschiebestrecke 10 wieder parallel zu ihrer Transportrichtung ausgerichtet sind.

Schließlich gelangen die Kraftfahrzeugkarosserien 1 dann in einen auslaufseitigen Transportweg 12, über den die Kraftfahrzeugkarosserien in herkömmlicher Weise abtransportiert werden.

In den einzelnen parallelen Zweigen 5-9 befindet sich jeweils eine Lackierbox 13-17, so dass in jedem der Zweige 5-9 eine Lackierung der Kraftfahrzeugkarosserien 1 möglich ist.

Darüber hinaus befindet sich in den parallelen Zweigen 5-9 jeweils eine einlaufseitige Abdunststation 18-22 und eine auslaufseitige Ablaufstation 23-27.

Ferner zeigt die Zeichnung noch eine zentrale Lesestation 28, welche die einlaufenden Kraftfahrzeugkarosserien 1 identifiziert. Die Identifikation der einlaufenden Kraftfahrzeugkarosserien 1 ist für die zentrale Steuerung der gesamten Lackieranlage wichtig, damit die einlaufenden Kraftfahrzeugkarosserien 1 in optimaler Weise auf die verschiedenen Zweige 5-9 verteilt werden können.

So ist es beispielsweise wünschenswert, die Farbwechselverluste zu minimieren. Dies lässt sich dadurch erreichen, dass die einlaufenden Kraftfahrzeugkarosserien 1 nach Möglichkeit auf denjenigen Zweig 5-9 verteilt werden, in dem bereits die gewünschte Farbe lackiert wird, so dass dort kein Farbwechsel erforderlich ist.

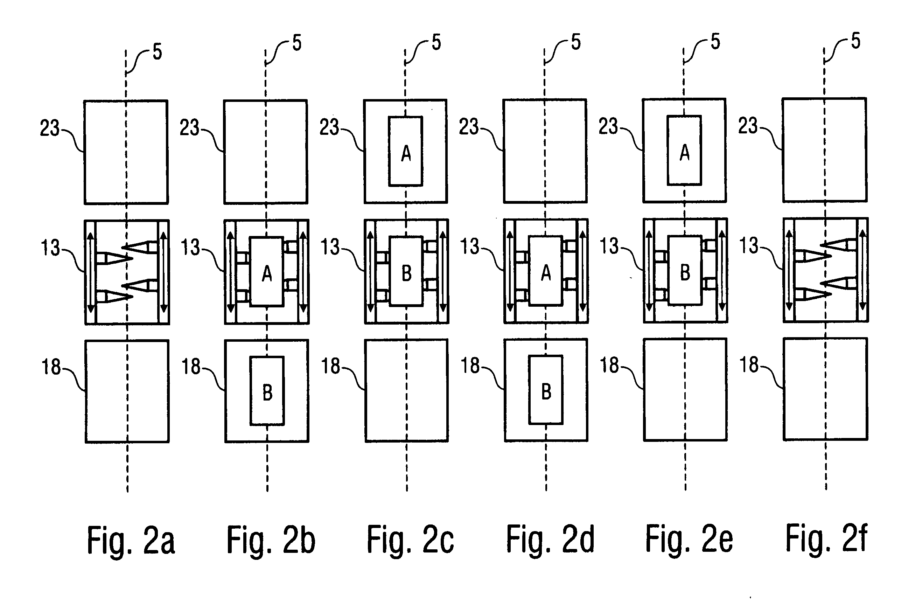

Im Folgenden wird nun unter Bezugnahme auf die Figuren 2a-2f die Betriebsweise der vorstehend beschriebenen und in Figur 1 dargestellten Lackieranlage beschrieben, wobei zur Vereinfachung nur der Zweig 5 dargestellt ist. Der Betrieb in den anderen Zweigen 6-9 erfolgt jedoch in entsprechender Weise.

Figur 2a zeigt den Zustand des Zweigs 5 der Lackieranlage zu Beginn, wobei sich weder in den beiden Abdunststationen 18, 23 noch in der Lackierbox 13 eine Kraftfahrzeugkarosserie befindet.

Die Querverschiebestrecke 3 fördert dann nacheinander zwei Kraftfahrzeugkarosserien A, B in den Zweig 5, so dass sich die Kraftfahrzeugkarosserie A in der Lackierbox 13 und die Kraftfahrzeugkarosserie B in der Abdunststation 18 befindet wie in Figur 2b dargestellt ist. In dieser Phase wird dann die Kraftfahrzeugkarosserie A in der Lackierbox 13 lackiert, während die Kraftfahrzeugkarosserie B in der Abdunststation 18 wartet.

Anschließend werden die beiden Kraftfahrzeugkarosserien A, B dann in dem Zweig 5 in Auslaufrichtung um eine Station weiter gefördert, so dass sich die Kraftfahrzeugkarosserie A in der auslaufseitigen Abdunststation 23 und die Kraftfahrzeugkarosserie B in der Lackierbox 13 befindet, wie in Figur 2c dargestellt ist. In dieser Phase erfolgt dann eine Trocknung der zuvor lackierten Kraftfahrzeugkarosserie A in der Abdunststation 23, während die Kraftfahrzeugkarosserie B in der Lackierbox 13 erstmalig lackiert wird.

Danach werden die beiden Kraftfahrzeugkarosserien A, B dann in dem Zweig 5 wieder um eine Station zurück transportiert, so dass sich die Kraftfahrzeugkarosserie A wieder in der Lackierbox 13 und die Kraftfahrzeugkarosserie B in der einlaufseitigen Abdunststation 18 befindet, wie in Figur 2D dargestellt ist. Die Kraftfahrzeugkarosserie A wird dann in der Lackierbox 13 ein zweites Mal lackiert, während die zuvor erstmalig lackierte Kraftfahrzeugkarosserie B in der einlaufseitigen Abdunststation 18 trocknet.

Anschließend werden die beiden Kraftfahrzeugkarosserien A, B dann wieder um eine Station in Richtung des Auslaufs transportiert, so dass sich die Kraftfahrzeugkarosserie A in der auslaufseitigen Abdunststation 23 und die Kraftfahrzeugkarosserie B in der Lackierbox 13 befindet, wie in Figur 2e dargestellt ist. In dieser Phase trocknet dann die zuvor zum zweiten Mal lackierte Kraftfahrzeugkarosserie A in der auslaufseitigen Abdunststation 23, während die Kraftfahrzeugkarosserie B in der Lackierbox 13 zum zweiten Mal lackiert wird. Schließlich werden die beiden Kraftfahrzeugkarosserien A, B dann nach Abschluss der zweimaligen Lackierung aus dem Zweig 5 abtransportiert, so dass sich in den beiden Abdunststationen 18, 23 und in der Lackierbox 13 keine Kraftfahrzeugkarosserien A, B bzw. 1 befinden, wie in Figur 2f dargestellt ist.

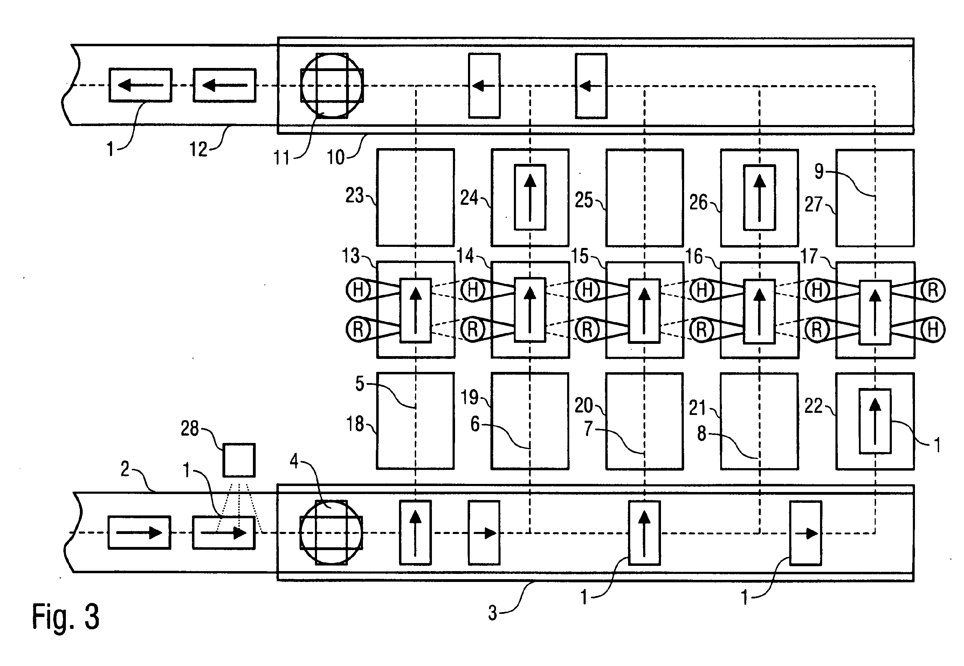

Das Ausführungsbeispiel gemäß Figur 3 stimmt weitgehend mit dem vorstehend beschriebenen und in den Figuren 1 sowie 2a-2f dargestellten Ausführungsbeispiel überein, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass zwischen den benachbarten Lackierboxen 13-17 jeweils ein Lackierroboter R und ein Handhabungsroboter H angeordnet sind, wobei der Handhabungsroboter H und der Lackierroboter R die beiden angrenzenden Lackierboxen 13-17 bedienen. Hierzu sind die einzelnen Lackierboxen 13-17 so nah nebeneinander angeordnet, dass jeweils zwei benachbarte Lackierboxen 13-17 in der Reichweite des dazwischen angeordneten Handhabungsroboters H bzw. des dazwischen angeordneten Lackierroboters R befinden. Dies bietet den Vorteil, dass auf zahlreiche Roboter verzichtet werden kann.

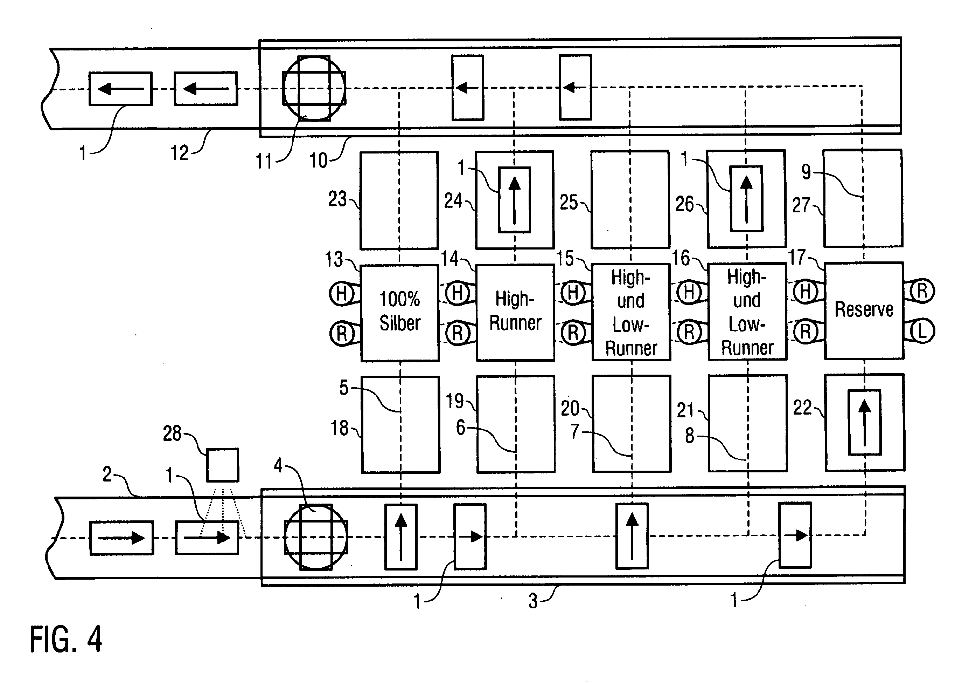

Das Ausführungsbeispiel gemäß Figur 4 stimmt weitgehend mit dem vorstehend beschriebenen und in Figur 3 dargestellten Ausführungsbeispiel überein, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass die Lackierbox 13 ausschließlich zur Lackierung des am häufigsten gewünschten Lacks vorgesehen ist, wobei es sich derzeit in Europa um Silber und in Asien um Weiß handelt. Dementsprechend weist die Lackierbox 13 in diesem Ausführungsbeispiel auch keine Farbwechseleinrichtungen auf. Wenn das zentrale Lesegerät 28 also einlaufseitig erkennt, dass die einlaufende Kraftfahrzeugkarosserie 1 mit Silber lackiert werden soll, so wird die Querverschiebestrecke 3 so angesteuert, dass die zugehörige Kraftfahrzeugkarosserie 1 in den Zweig 5 transportiert wird.

Der Zweig 6 dient dagegen in diesem Ausführungsbeispiel zur Lackierung von häufig gewünschten Farben (engl. "High-Runner"), wobei die Lackierbox 14 in dem Zweig 6 im Gegensatz zu der Lackierbox 13 in dem Zweig 5 einen Farbwechsel zwischen den verschiedenen häufig gewünschten Farben ermöglicht.

Die Lackierboxen 15 bzw. 16 in den Zweigen 7 bzw. 8 dienen dagegen sowohl zur Lackierung von häufig gewünschten Farben ("High-Runnern") als auch zur Lackierung von selten gewünschten Farben ("Low-Runnern").

Eine weitere Besonderheit dieses Ausführungsbeispiels besteht schließlich darin, dass der Zweig 9 ausschließlich als Reserve dient und im normalen Lackierbetrieb nicht benötigt wird. Die Lackierbox 17 in dem Zweig 9 kann deshalb beispielsweise zu Wartungszwecken oder für Reparaturarbeiten genutzt werden, ohne dass die Kapazität der gesamten Lackieranlage darunter leidet.

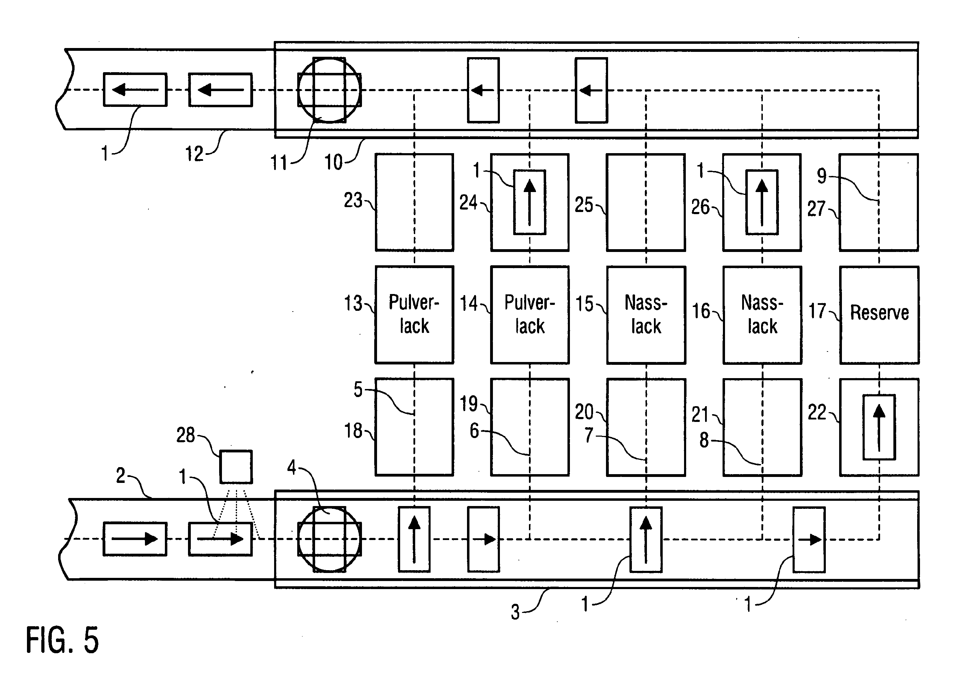

Figur 5 zeigt ein weiteres Ausführungsbeispiel einer erfindungsgemäßen Beschichtungsanlage, das weitgehend mit den vorstehend beschriebenen Ausführungsbeispielen übereinstimmt, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass die Lackierboxen 13, 14 in den Zweigen 5, 6 nur Pulverlack applizieren, während die Lackierboxen 15, 16 in den Zweigen 7, 8 nur Nasslack applizieren. Die Beschichtungsanlage ermöglicht also in diesem Ausführungsbeispiel wahlweise die Applikation von Pulverlack und Nasslack. Wenn die zentrale Lesestation 28 erkennt, dass die einlaufende Kraftfahrzeugkarosserie 1 mit Pulverlack lackiert werden sollen, so steuert die zentrale Lackiersteuerung die Querverschiebestrecke 3 so an, dass die Kraftfahrzeugkarosserie 1 entweder in den Zweig 5 oder in den Zweig 6 gefördert wird. Wenn die zentrale Lesestation 28 dagegen erkennt, dass die einlaufende Kraftfahrzeugkarosserie 1 mit Nasslack lackiert werden soll, so steuert die zentrale Lackiersteuerung die Querverschiebestrecke 3 so an, dass diese Kraftfahrzeugkarosserie 1 entweder in den Zweig 7 oder in den Zweig 8 transportiert wird.

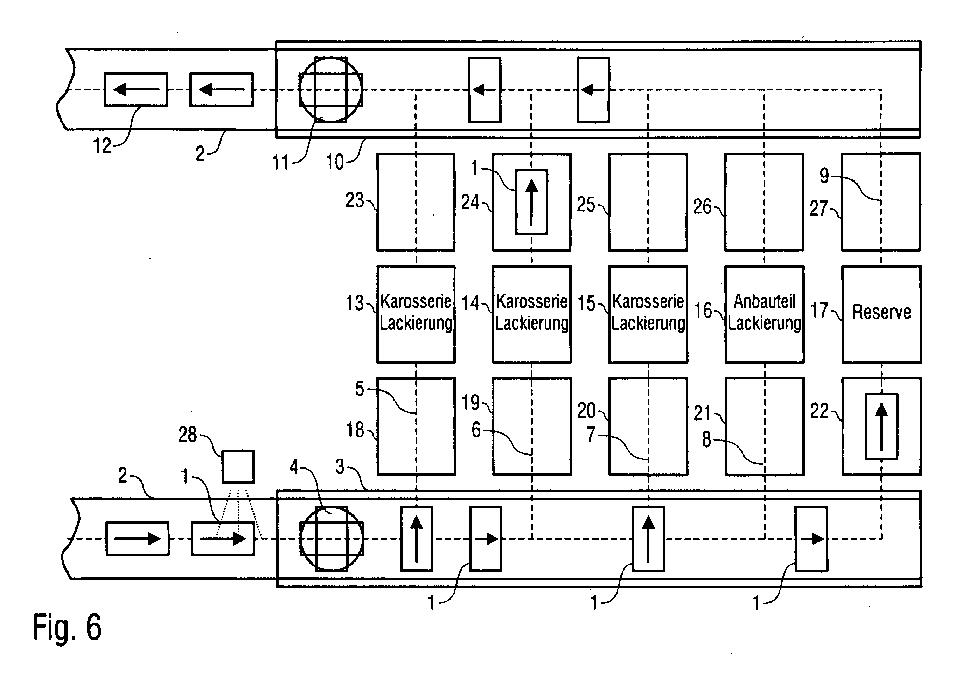

Das Ausführungsbeispiel gemäß Figur 6 stimmt wiederum weitgehend mit den vorstehend beschriebenen Ausführungsbeispielen überein, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass die Lackierboxen 13, 14, 15 in den Zweigen 5, 6, 7 nur zur Lackierung der Kraftfahrzeugkarosserien 1 dienen, während die Lackierbox 16 in dem Zweig 8 für die Lackierung von Anbauteilen reserviert ist. Die Lackierbox 16 kann deshalb im Hinblick auf die spezifischen Anforderungen für die Lackierung von Anbauteilen optimiert werden, während die anderen Lackierboxen 13-15 im Hinblick auf die spezifischen Anforderungen an die Lackierung der Kraftfahrzeugkarosserien 1 optimiert werden können.

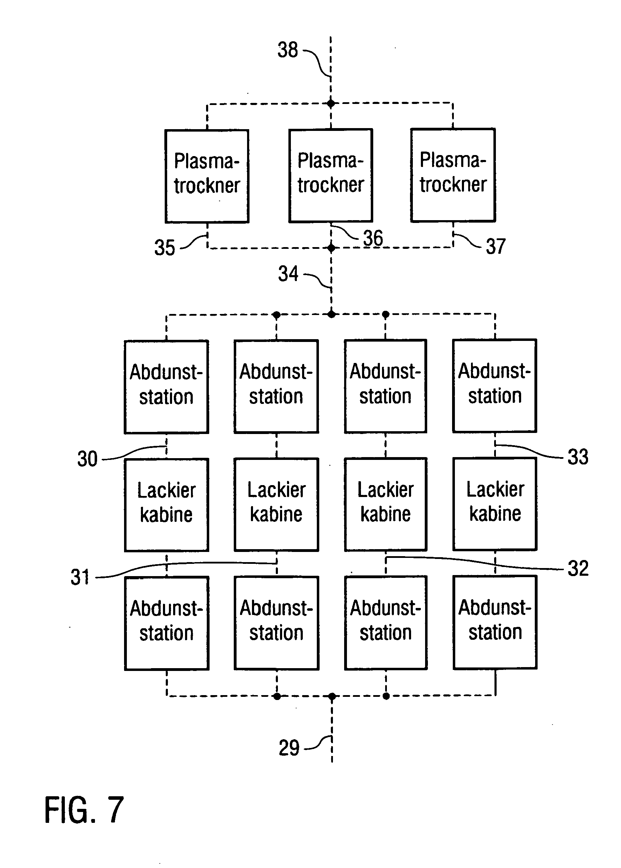

Figur 7 zeigt ein weiteres Ausführungsbeispiel einer erfindungsgemäßen Beschichtungsanlage in stark vereinfachter, schematisierter Form.

Hierbei verzweigt ein einlaufseitiger Transportweg 29 in vier parallele Zweige 30-33, die auslaufseitig wieder zu einem gemeinsamen Transportweg 34 zusammengeführt sind. Der gemeinsame Transportweg 34 verzweigt dann wieder in drei parallele Zweige 35, 36, 37, die dann wiederum auslaufseitig zu einem gemeinsamen Transportweg 38 zusammengeführt sind.

In den Zweigen 30-33 befinden sich jeweils hintereinander zwei Abdunststationen und eine dazwischen angeordnete Lackierkabine, wie bereits vorstehend anhand der Figuren 1 und 2a-2f beschrieben wurde.

In den Zweigen 35-37 befindet sich dagegen jeweils ein Plasmatrockner, der die Beschichtungsobjekte trocknet, was an sich aus dem Stand der Technik bekannt ist.

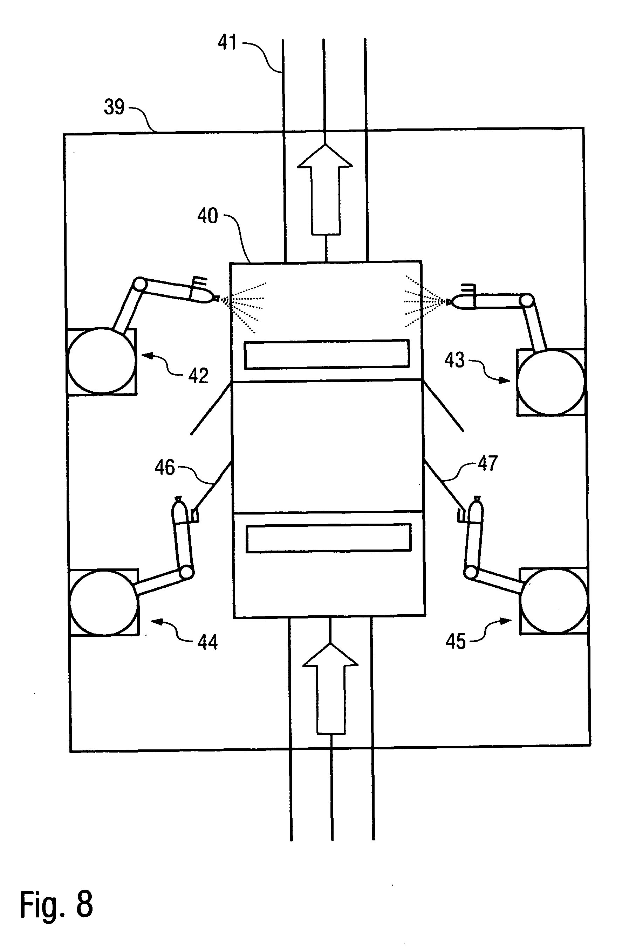

Figur 8 zeigt ein vereinfachtes Ausführungsbeispiel einer Lackierbox 39 zur Lackierung einer Kraftfahrzeugkarosserie 40, wobei die Kraftfahrzeugkarosserie 40 entlang einem Transportweg 41 durch die Lackierbox 39 transportiert wird. Bei dem Transportweg 41 kann es sich beispielsweise um einen von mehreren parallelen Zweigen handeln, wie vorstehend beschrieben wurde.

In der Lackierbox 39 befinden sich zwei Klarlack-Lackierroboter 42, 43 und zwei Basislack-Lackierroboter 44, 45, wobei sowohl die beiden Klarlack-Lackierroboter 42, 43 als auch die beiden Basislack-Lackierroboter 44, 45 auch als Handhabungsroboter eingesetzt werden können. In Figur 8 applizieren die beiden Klarlack-Lackierroboter 42, 43 Klarlack auf die Kraftfahrzeugkarosserie 40, während die beiden Basislack-Lackierroboter 44, 45 keinen Basislack applizieren, sondern als Handhabungsroboter dienen und dabei Türen 46, 47 der Kraftfahrzeugkarosserie 40 öffnen.

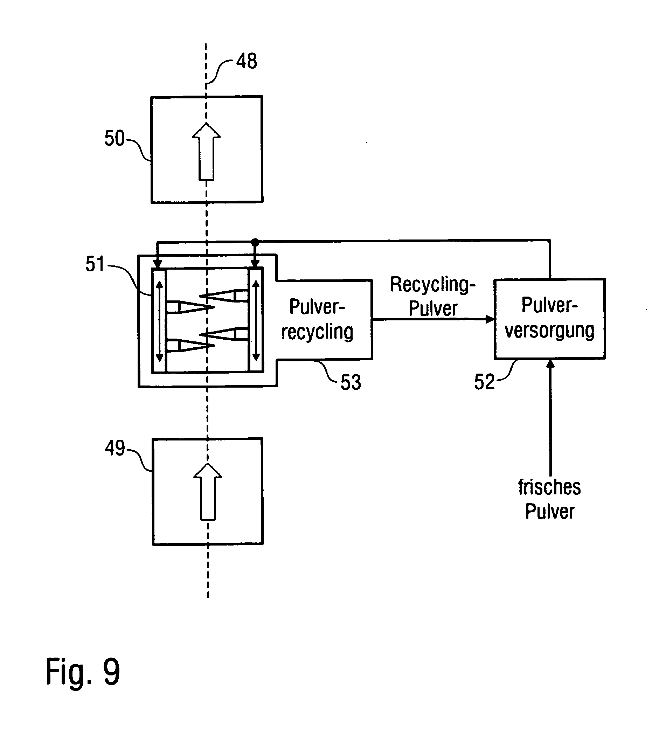

Figur 9 zeigt ein weiteres Ausführungsbeispiel mit einer erfindungsgemäßen Beschichtungsanlage mit einem Transportweg 48, in dem hintereinander zwei Abdunststationen 49, 50 und eine monochromatische Lackierstation 51 angeordnet sind. Die Lackierstation 51 dient hierbei zur Applikation von Pulverlack, der von einer Pulverversorgungseinrichtung 52 bereitgestellt wird, wobei die Pulverversorgungseinrichtung 52 teilweise mit frischem Pulverlack und teilweise mit Recycling-Pulver versorgt wird.

Das Recycling-Pulver wird hierbei von einer Pulver-Recycling-Einrichtung 53 an der Lackierstation 51 aufgefangen. Vorteilhaft hierbei ist die Tatasche, dass das aufgefangene Recycling-Pulver monochromatisch ist und sich deshalb gut zur Wiederverwertung eignet.

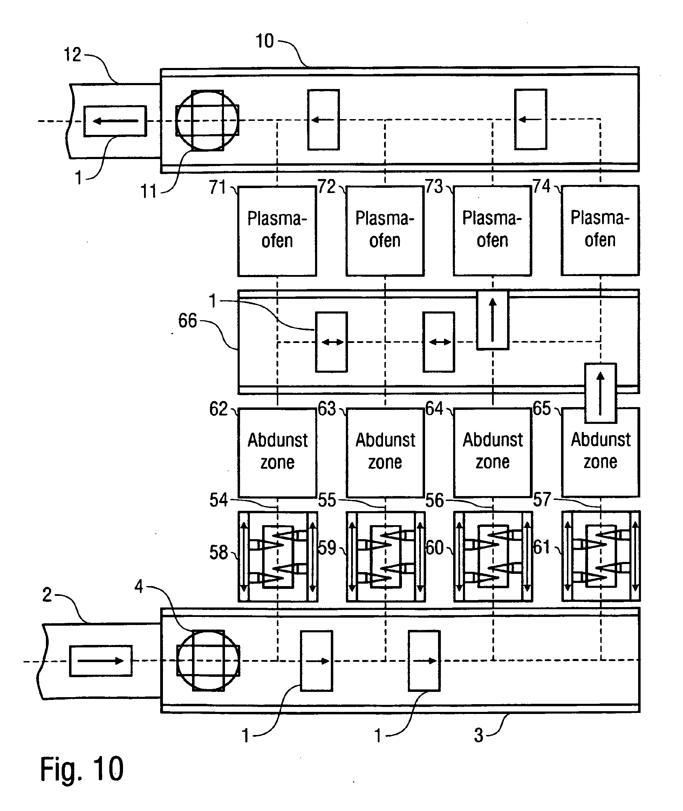

Figur 10 zeigt ein weiteres Ausführungsbeispiel einer erfindungsgemäßen Beschichtungsanlage, das weitgehend mit den vorstehend beschriebenen Ausführungsbeispielen übereinstimmt, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass die Querverschiebeeinrichtung 3 vier parallele Zweige mit den Kraftfahrzeugkarosserien 1 versorgt, wobei in den parallelen Zweigen 54-57 jeweils eine Lackierbox 58-61 und jeweils eine Abdunststation 62-65 angeordnet ist.

Die Zweige 54-57 münden in eine zusätzliche Querverschiebestrecke 66, die wiederum vier parallele Zweige 67-70 mit den Kraftfahrzeugkarosserien 1 versorgt. In den parallelen Zweigen 67-70 ist jeweils ein Plasmaofen 71-74 angeordnet.

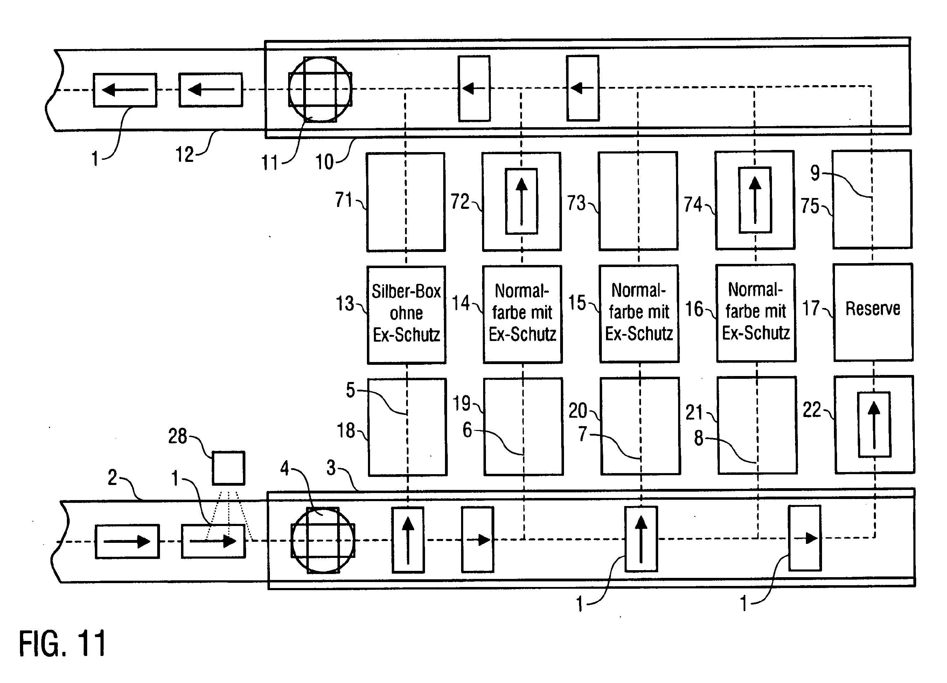

Schließlich zeigt Figur 11 wieder ein Ausführungsbeispiel einer erfindungsgemäßen Lackieranlage, das weitgehend mit den vorstehend beschriebenen Ausführungsbeispielen übereinstimmt, so dass zur Vermeidung von Wiederholungen auf die vorstehende Beschreibung verwiesen wird.

Eine Besonderheit dieses Ausführungsbeispiels besteht darin, dass in der Lackierbox 13 nur Silber oder ein anderer High-Runner appliziert wird, der wenig Lösungsmittel enthält und deshalb nur eine geringe Brand- bzw. Explosionsgefahr aufweist. Dementsprechend weist die Lackierbox 13 keinen Explosionsschutz auf.

Die Lackierboxen 14-16 dienen dagegen zur Applikation anderer Farben mit einem höheren Lösemittelanteil und einer entsprechend größeren Brand- bzw. Explosionsgefahr, so dass die Lackierboxen 14-16 mit einem Explosionsschutz ausgestattet sind, wie er aus dem Stand der Technik bekannt ist und deshalb nicht näher beschrieben werden muss.

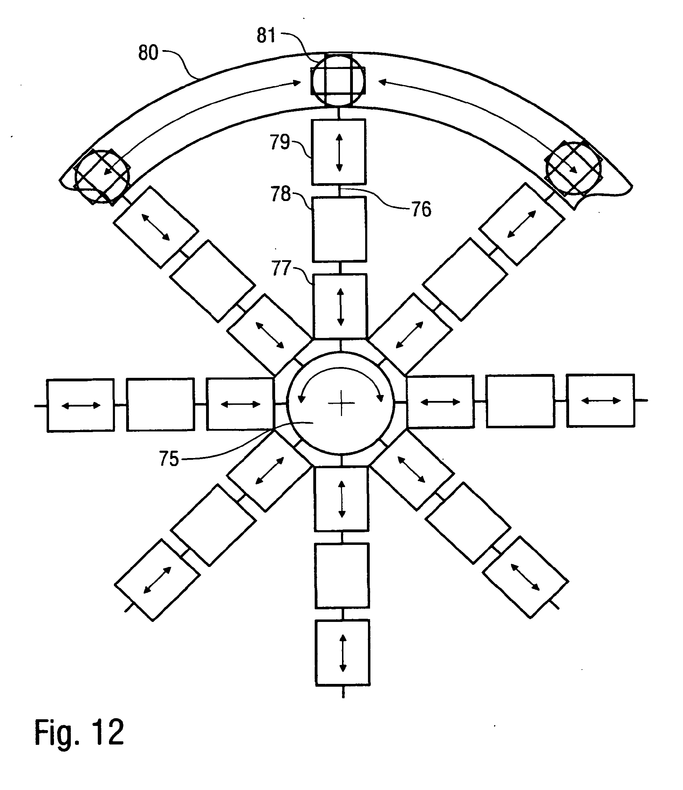

Figur 12 zeigt ein alternatives Ausführungsbeispiel einer erfindungsgemäßen Lackieranlage zur Lackierung von Kraftfahrzeugkarosserieteilen.

Hierbei ist mittig ein Spirallift 75 angeordnet, der an sich bekannt ist und die Zuführung der einzelnen Beschichtungsobjekte über eine Hebebewegung ermöglicht.

Die einzelnen Beschichtungsobjekte werden dann auf acht radial verlaufende Zweige 76 des Transportwegs verteilt, wobei in den einzelnen Zweigen 76 jeweils drei Bearbeitungsstationen 77, 78, 79 angeordnet sind. In diesem Ausführungsbeispiel ist die Bearbeitungsstation 78 eine Lackierkabine, während die Bearbeitungsstationen 77, 79 Abdunststationen sind. Bei den Bearbeitungsstationen 77-79 kann es sich jedoch auch um andere Bearbeitungsstationen handeln, wie sie bereits vorstehend ausführlich beschrieben wurden.

Ausgangsseitig münden die einzelnen radialen Zweige 76 des Transportwegs in einen gemeinsamen Ringförderer 80, der am Umfang der sternförmigen Anordnung angeordnet ist und die einzelnen Beschichtungsobjekte in Umfangsrichtung bidirektional fördern kann. Der Ringförderer 80 weist an den Mündungsstellen der einzelnen radialen Zweige 76 des Transportwegs jeweils eine Drehvorrichtung 81 auf, mit der die einzelnen Beschichtungsobjekte jeweils um ihre Hochachse in die Förderrichtung des Ringförderers 80 gedreht werden können.

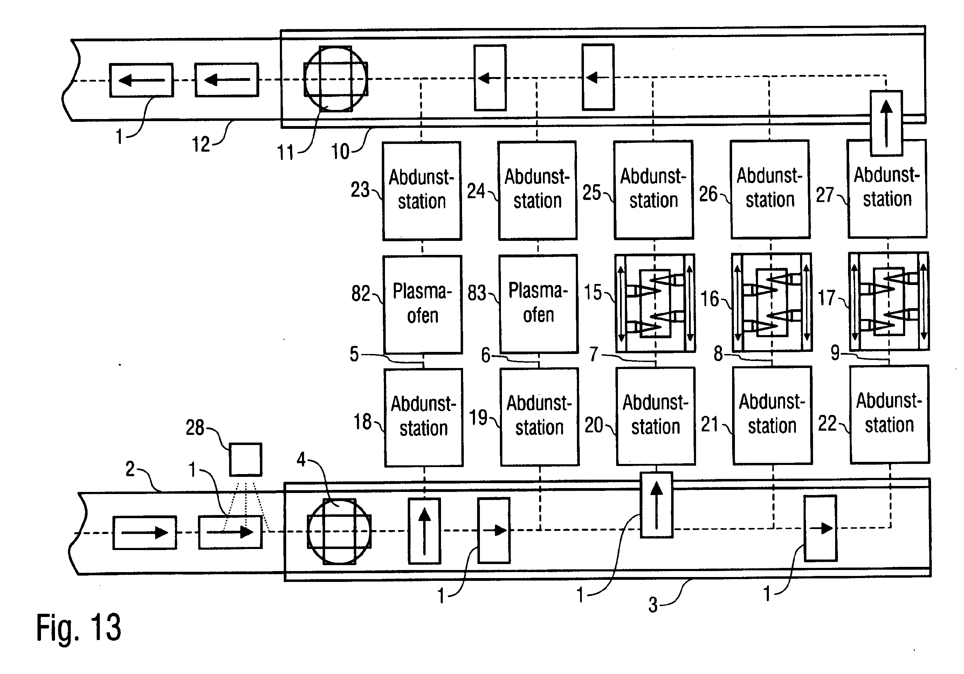

Schließlich zeigt Figur 13 eine Abwandlung, die weitgehend mit dem Ausführungsbeispiel gemäß Figur 1 übereinstimmt, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht darin, dass anstelle der beiden Lackierboxen 13, 14 jeweils ein Plasmaofen 82, 83 angeordnet ist.

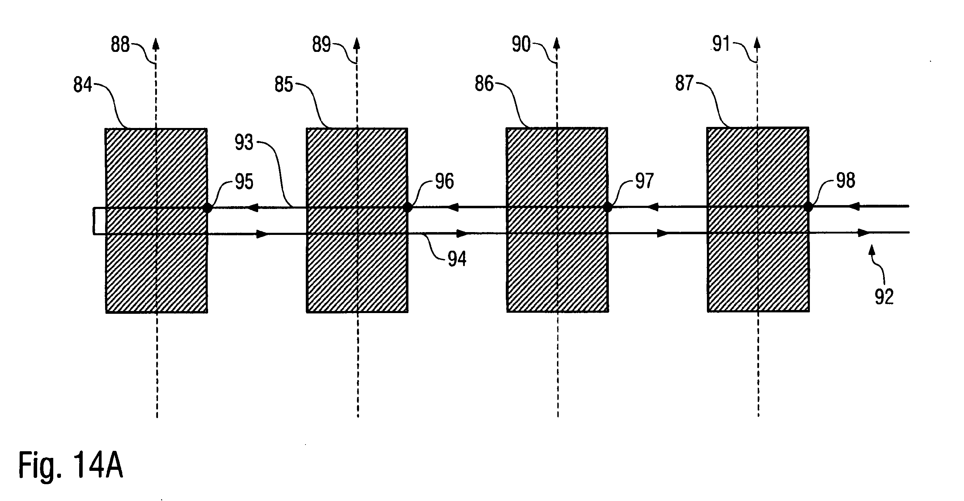

Figur 14A zeigt eine erfindungsgemäße Ringleitungsanordnung zur Versorgung von mehreren Lackierkabinen 84-87 mit dem zu applizierenden Beschichtungsmittel.

Die einzelnen Lackierkabinen 84-87 sind hierbei in mehreren parallelen Zweigen 88-91 nebeneinander in einer Reihe angeordnet, wobei die zu lackierenden Beschichtungsobjekte (z.B. Kraftfahrzeugkarosserien) in Pfeilrichtung entlang den Zweigen 88-91 durch die Lackierkabinen 84-87 transportiert werden.

Die Beschichtungsmittelversorgung erfolgt hierbei durch eine Ringleitung 92 mit einer Hinleitung 93 und einer Rückleitung 94. Die Hinleitung 93 und die Rückleitung 94 verlaufen hierbei geradlinig entlang der Reihe der Lackierkabinen 84-87, wobei das Beschichtungsmittel in der Hinleitung 93 und in der Rückleitung 94 jeweils in Pfeilrichtung strömt.

In jeder der Lackierkabinen 84-87 weist die Ringleitung 92 jeweils einen Kabelschleppausgang 95-98 auf, an den mittels eines Kabelschlepps in herkömmlicher Weise Applikationsgeräte (z.B. Rotationszerstäuber, Sprühpistole) angeschlossen werden können, wie beispielsweise aus DE 39 27 880 A1 bekannt ist.

Die einzelnen Kabelschleppausgänge 95-98 sind hierbei bezüglich der Reihe der Lackierkabinen 84-87 mittig angeordnet, so dass die Ringleitung 92 nicht mehr mäanderförmig um die einzelnen Lackierkabinen 84-87 herumgeführt werden muss.

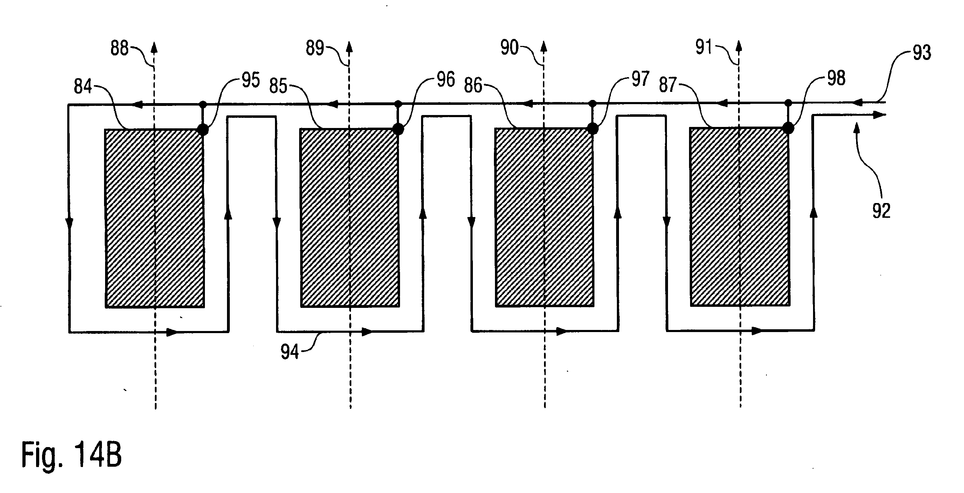

Figur 14B zeigt eine alternative Leitungsführung der Ringleitung 92, wobei dieses Ausführungsbeispiel weitgehend mit dem vorstehend beschriebenen und in Figur 14A dargestellten Ausführungsbeispiel übereinstimmt, so dass zur Vermeidung von Wiederholungen weitgehend auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Rückleitung 94 der Ringleitung 92 mäanderförmig geführt ist, wobei die Rückleitung 94 zwischen den unmittelbar benachbarten Lackierkabinen jeweils eine Schlinge bildet, so dass die Rückleitung 94 auf einer Seite der Reihe der Lackierkabinen 84-87 verläuft.

Auch in diesem Ausführungsbeispiel verläuft die Hinleitung 93 der Rückleitung 92 geradlinig entlang der Reihe der Lackierkabinen 84-87. Allerdings verläuft die Hinleitung 93 hierbei in Transportrichtung hinter der Reihe der Lackierkabinen 84-87, so dass auch die Kabelschleppausgänge 95-98 an der Hinterseite der Lackierkabinen 84-87 seitlich angeordnet sind, wobei die Verbindung zwischen den Kabelschleppausgängen 95-98 und der Hinleitung 93 jeweils durch eine Stichleitung erfolgt.

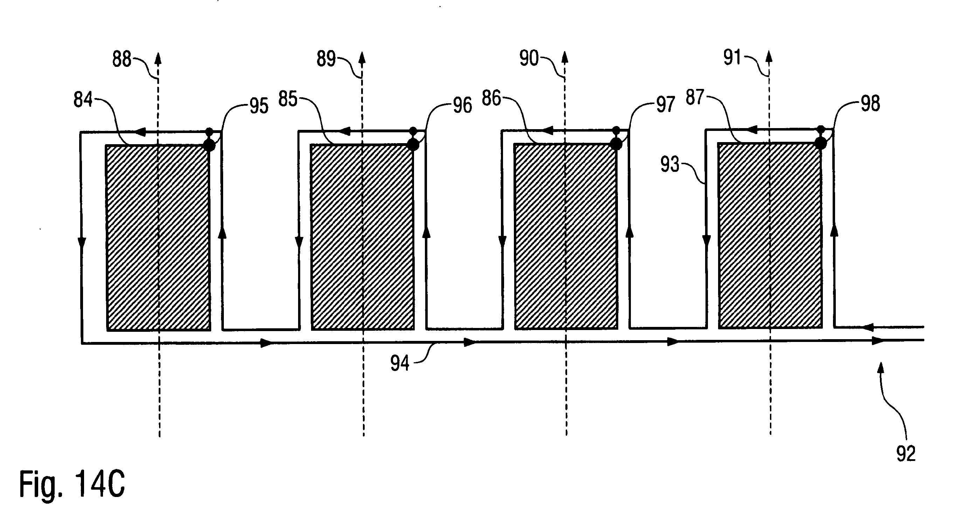

Figur 14C zeigt ein weiteres Ausführungsbeispiel einer möglichen Leitungsführung der Ringleitung 92, wobei dieses Ausführungsbeispiel teilweise mit dem vorstehend beschriebenen und in den Figuren 14A und 14B dargestellten Ausführungsbeispielen übereinstimmt, so dass zur Vermeidung von Wiederholungen weitgehend auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Rückleitung 94 der Ringleitung 92 entlang der Reihe der Lackierkabinen 84-87 geradlinig geführt ist, wobei die Rückleitung 94 in Transportrichtung vor der Reihe der Lackierkabinen 84-87 angeordnet ist.

Die Hinleitung 93 ist bei diesem Ausführungsbeispiel dagegen mäanderförmig entlang der Reihe der Lackierkabinen 84-87 geführt, wobei die einzelnen Kabelschleppausgänge 95-98 jeweils in Transportrichtung hinten seitlich in den Lackierkabinen 84-87 angeordnet sind.

In den vorstehend beschriebenen Ausführungsbeispielen verschiedener Ringleitungsanordnungen kann die Ringleitung 92 wahlweise in einem Plenum, einer Auswaschung, einem Kabinenträger oder in sonstigen Elementen der Lackierkabinen 84-87 angeordnet sein. Bei der mittigen Anordnung der Ringleitung 92 gemäß Figur 14A verläuft die Ringleitung 92 entweder oberhalb des Lackierbereichs der Lackierkabine oder unterhalb des Lackierbereichs der Lackierkabine, so dass die Ringleitung 92 den lichten Querschnitt der Lackierkabine nicht verringert.

### Bezugszeichenliste:

- 1: Kraftfahrzeugkarosserien#
- 2: Transportweg
- 3: Querverschiebestrecke
- 4: Drehvorrichtung
- 5-9: Zweige des Transportwegs
- 10: Querverschiebestrecke
- 11: Drehvorrichtung
- 12: Transportweg
- 13-17: Lackierboxen
- 18-22: einlaufseitige Abdunststationen
- 23-27: auslaufseitige Abdunststationen
- 28: Lesestation
- 29: Einlaufseitiger Transportweg
- 30-33: Zweige
- 34: gemeinsamer Transportweg
- 35-37: Parallele Zweige
- 38: gemeinsamer Transportweg
- 39: Lackierbox
- 40: Kraftfahrzeugkarosserie
- 41: Transportweg
- 42, 43: Klarlack-Lackierroboter
- 44, 45: Basislack-Lackierrboter
- 46, 47: Türen
- 48: Transportweg
- 49, 50: Abdunststation
- 51: Lackierstation
- 52: Pulverversorgungseinrichtung
- 53: Pulver-Recycling-Einrichtung
- 54-57: Parallele Zweige
- 58-61: Lackierboxen
- 62-65: Abdunststationen
- 66: Querverschiebestrecke
- 67-70: Parallele Zweige
- 71-74: Plasmaofen
- 75: Spirallift
- 76: Zweig des Transportwegs
- 77-79: Bearbeitungsstationen
- 80: Ringförderer
- 81: Drehvorrichtung
- 82, 83: Plasmaofen
- 84-87: Lackierkabinen
- 88-91: Zweige
- 92: Ringleitung
- 93: Hinleitung
- 94: Rückleitung
- 95-98: Energiekettenausgang
- A, B: Kraftfahrzeugkarosserien
- H: Handhabungsroboter
- R: Lackierroboter

## Patentansprüche

1. Beschichtungsanlage, insbesondere zur Lackierung von Kraftfahrzeugkarosserien, mit
a) einem Transportweg (2, 12), entlang dem nacheinander mehrere Beschichtungsobjekte (1) durch die Beschichtungsanlage transportiert werden, und
b) mehreren Behandlungsstationen (13-17, 18-22, 23-27), in denen die Beschichtungsobjekte (1) behandelt werden,
c) wobei der Transportweg (2, 12) in mehrere parallele Zweige (5-9, 30-33, 35-37, 54-57) verzweigt, in denen jeweils mindestens eine der Behandlungsstationen (13-17, 18-22, 23-27) angeordnet ist,
**dadurch gekennzeichnet,**
d) **dass** die einzelnen Behandlungsstationen (13-17, 18-22, 23-27) standardisierte Module bilden,
e) **dass** die verschiedenen Behandlungsstationen (13-17, 18-22, 23-27) einheitliche Außenabmessungen aufweisen, und
f) **dass** die verschiedenen Behandlungsstationen (13-17, 18-22, 23-27) einheitliche Anschlüsse für Druckluft, Beschichtungsmittel, Spülmittel, Zuluft, Abluft, Steuersignale, Messsignale und Stromversorgung aufweisen.

2. Beschichtungsanlage nach Anspruch 1, **dadurch gekennzeichnet, dass** die parallelen Zweige (5-9, 30-33, 35-37, 54-57) des Transportwegs (2, 12) auslaufseitig wieder zusammengeführt sind.

3. Beschichtungsanlage nach einem der vorhergehenden Ansprüche, **dadurch gekennzeichnet, dass** in den parallelen Zweigen des Transportwegs (2, 12) jeweils mindestens eine Beschichtungsstation (13-17) angeordnet ist, in der die Beschichtungsobjekte (1) mit einem Beschichtungsmittel beschichtet werden.

4. Beschichtungsanlage nach einem der vorhergehenden Ansprüche, **dadurch gekennzeichnet, dass** in mindestens einem Zweig des Transportwegs vor der Behandlungsstation eine Wartestation angeordnet ist.

5. Beschichtungsanlage nach einem der vorhergehenden Ansprüche, **dadurch gekennzeichnet, dass** der Transportweg (2, 12) zumindest in den parallelen Zweigen einen bidirektionalen Transport der Beschichtungsobjekte (1) ermöglicht.

6. Beschichtungsanlage nach einem der vorhergehenden Ansprüche, **dadurch gekennzeichnet,**
a) **dass** an dem Transportweg (2, 12) vor der Verzweigung eine zentrale Lesestelle (28) angeordnet ist, um die einlaufenden Beschichtungsobjekte (1) zu identifizieren und
b) **dass** in den parallelen Zweigen des Transportwegs (2, 12) keine zusätzliche Lesestelle angeordnet ist.

7. Beschichtungsanlage nach einem der vorhergehenden Ansprüche, **dadurch gekennzeichnet,**
a) **dass** die einzelnen Beschichtungsstationen als im Wesentlichen geschlossene Kabinen ausgebildet sind, die jeweils einen Kabineneinlauf und einen Kabinenauslauf aufweisen,
b) **dass** der Kabineneinlauf und/oder der Kabinenauslauf durch ein Tor, insbesondere durch ein Rolltor, verschließbar ist.

8. Beschichtungsanlage nach Anspruch 7, **dadurch gekennzeichnet, dass** das Tor mit einer Schließeinrichtung gesichert ist, wobei die Schließeinrichtung durch einen Schlüssel, einen PIN-Code, einen Fingerabdruck oder eine Code-Karte bedienbar ist.

9. Beschichtungsanlage nach einem der vorhergehenden Ansprüche, **gekennzeichnet durch** eine Ringleitung (92), welche die einzelnen Behandlungsstationen (84-87) mit einem Beschichtungsmittel oder einem sonstigen Fluid versorgt, wobei die Behandlungsstationen (84-87) in einer Reihe angeordnet sind.

10. Beschichtungsanlage nach Anspruch 9,
**dadurch gekennzeichnet,**
a) **dass** die Ringleitung (92) eine Hinleitung (93) und eine Rückleitung (94) aufweist,
b) **dass** die Hinleitung (93) im Wesentlichen geradlinig entlang der Reihe der Behandlungsstationen (84-87) verläuft, und
c) **dass** die Rückleitung (94) im Wesentlichen geradlinig entlang der Reihe der Behandlungsstationen (84-87) verläuft.

11. Beschichtungsanlage nach Anspruch 10,
**dadurch gekennzeichnet,**
a) **dass** die Ringleitung (92) in den einzelnen Behandlungsstationen (84-87) jeweils einen Energieführungskettenausgang (95-98) aufweist, an den eine Energieführungskette zur Versorgung angeschlossen werden kann, um Geräte in den einzelnen Behandlungsstationen (84-87) mit dem Beschichtungsmittel oder dem sonstigen Fluid zu versorgen, und
b) **dass** der Energieführungskettenausgang (95-98) in den einzelnen Behandlungsstationen (84-87) mittig angeordnet ist und zwar bezüglich der Reihe der Behandlungsstationen (84-87) und/oder bezüglich der einzelnen Behandlungsstationen (84-87).

12. Beschichtungsanlage nach Anspruch 9, **dadurch gekennzeichnet,**
a) **dass** die Hinleitung (93) der Ringleitung (92) mäanderförmig entlang der Reihe der Behandlungsstationen (84-87) und um die einzelnen Behandlungsstationen (84-87) verläuft, und
b) **dass** die Rückleitung (94) der Ringleitung (92) im Wesentlichen geradlinig entlang der Reihe der Behandlungsstationen (84-87) verläuft.

13. Beschichtungsanlage nach Anspruch 9,
**dadurch gekennzeichnet,**
a) **dass** die Hinleitung (93) der Ringleitung (92) im Wesentlichen geradlinig entlang der Reihe der Behandlungsstationen (84-87)verläuft, und
b) **dass** die Rückleitung (94) der Ringleitung (92) mäanderförmig entlang der Reihe der Behandlungsstationen (84-87) und um die einzelnen Behandlungsstationen (84-87) verläuft.

14. Beschichtungsanlage nach Anspruch 12 oder 13, **dadurch gekennzeichnet, dass** die mäanderförmige Hinleitung (93) bzw. Rückleitung (94) zwischen den benachbarten Behandlungsstationen (84-87) jeweils eine Schlinge bildet, so dass die mäanderförmige Hinleitung (93) bzw. Rückleitung (94) jeweils auf derselben Seite der Reihe der Behandlungsstationen (84-87) verläuft.

15. Beschichtungsanlage nach Anspruch 12 oder 13, **dadurch gekennzeichnet, dass** die mäanderförmige Hinleitung (93) bzw. Rückleitung (94) zwischen den benachbarten Behandlungsstationen (84-87) jeweils von einer Seite der Reihe der Behandlungsstationen (84-87) auf die gegenüber liegende Seite der Reihe der Behandlungsstationen (84-87) wechselt.

## Claims

1. A coating installation, in particular for painting motor vehicle bodies, comprising
a) a transport path (2, 12), along which a plurality of coating objects (1) are transported one after the other through the coating installation, and
b) a plurality of treatment stations (13-17, 18-22, 23-27), in which the coating objects (1) are treated,
c) wherein the transport path (2, 12) branches into a plurality of parallel branches (5-9, 30-33, 35-37, 54-57), in each of which at least one of the treatment stations (13-17, 18-22, 23-27) is arranged,
**characterized in that**
d) the individual treatment stations (13-17, 18-22, 23-27) form standardized modules,
e) the different treatment stations (13-17, 18-22, 23-27) have uniform external dimensions, and
f) the different treatment stations (13-17, 18-22, 23-27) have uniform connections for compressed air, coating agents, rinsing agents, supplied air, extracted air, control signals, measurement signals and power supply.

2. A coating installation according to claim 1, **characterized in that** the parallel branches (5-9, 30-33, 35-37, 54-57) of the transport path (2, 12) are combined again at the exit side.

3. A coating installation according to one of the preceding claims, **characterized in that** at least one coating station (13-17), in which the coating objects (1) are coated with a coating agent, is arranged in each of the parallel branches of the transport path (2, 12).

4. A coating installation according to one of the preceding claims, **characterized in that** a waiting station is arranged in front of the treatment station in at least one branch of the transport path.

5. A coating installation according to one of the preceding claims, **characterized in that** the transport path (2, 12) allows bidirectional transport of the coating objects (1) at least in the parallel branches.

6. A coating installation according to one of the preceding claims, **characterized in that**
a) a central reading point (28) for identifying the incoming coating objects (1) is arranged on the transport path (2, 12) before the branching, and
b) no additional reading point is arranged in the parallel branches of the transport path (2, 12).

7. A coating installation according to one of the preceding claims, **characterized in that**
a) the individual coating stations are designed as essentially closed booths which in each case have a booth entrance and a booth exit, and
b) the booth entrance and/or the booth exit can be closed by a shutter, in particular by a roller shutter.

8. A coating installation according to claim 7, **characterized in that** the shutter is secured by a lock device, wherein the lock device can be operated by a key, a PIN code, a fingerprint or a code card.

9. A coating installation according to one of the preceding claims, **characterized by** a ring line (92) which supplies the individual treatment stations (84-87) with a coating agent or other fluid, wherein the treatment stations (84-87) are arranged in a row.

10. A coating installation according to claim 9, **characterized in that**
a) the ring line (92) has a supply line (93) and a return line (94),
b) the supply line (93) runs in a substantially straight line along the row of treatment stations (84-87), and
c) the return line (94) runs in a substantially straight line along the row of treatment stations (84-87).

11. A coating installation according to claim 10, **characterized in that**
a) the ring line (92) in the individual treatment stations (84-87) in each case has an energy guiding chain outlet (95-98), to which an energy guiding chain can be connected for supply purposes, in order to supply devices in the individual treatment stations (84-87) with the coating agent or other fluid, and
b) the energy guiding chain outlet (95-98) is arranged centrally in the individual treatment stations (84-87), namely relative to the row of treatment stations (84-87) and/or relative to the individual treatment stations (84-87).

12. A coating installation according to claim 9, **characterized in that**
a) the supply line (93) of the ring line (92) runs in a meandering fashion along the row of treatment stations (84-87) and around the individual treatment stations (84-87), and
b) the return line (94) of the ring line (92) runs in a substantially straight line along the row of treatment stations (84-87).

13. A coating installation according to claim 9, **characterized in that**
a) the supply line (93) of the ring line (92) runs in a substantially straight line along the row of treatment stations (84-87), and
b) the return line (94) of the ring line (92) runs in a meandering fashion along the row of treatment stations (84-87) and around the individual treatment stations (84-87).

14. A coating installation according to claim 12 or 13, **characterized in that** the meandering supply line (93) or return line (94) in each case forms a loop between the adjacent treatment stations (84-87), so that the meandering supply line (93) or return line (94) in each case runs on the same side of the row of treatment stations (84-87).

15. A coating installation according to claim 12 or 13, **characterized in that** the meandering supply line (93) or return line (94) in each case changes from one side of the row of treatment stations (84-87) to the opposite side of the row of treatment stations (84-87) between the adjacent treatment stations (84-87).

## Revendications

1. Installation de revêtement, plus particulièrement pour la peinture de carrosseries de véhicules automobiles, avec
a) un trajet de transport (2, 12) le long duquel plusieurs objets à revêtir (1) sont transportés les uns après les autres à travers l'installation de revêtement et
b) plusieurs stations de traitement (13-17, 18-22, 23-27) dans lesquelles les objets à revêtir (1) sont traités
c) le trajet de transport (2, 12) étant divisé en plusieurs embranchements parallèles (5-9, 30-33, 35-37, 54-57) dans chacun desquels se trouve au moins une des stations de traitement (13-17, 18-22, 23-27),
**caractérisée en ce que**
d) les différentes stations de traitement (13-17, 18-22, 23-27) forment des modules standardisés,
e) les différentes stations de traitement (13-17, 18-22, 23-27) présentent des dimensions extérieures identiques et
f) les différentes stations de traitement (13-17, 18-22, 23-27) présentent des raccords identiques pour l'air comprimé, le produit de revêtement, le produit de rinçage, l'arrivée d'air, l'évacuation d'air, les signaux de commande, les signaux de mesure et l'alimentation électrique.

2. Installation de revêtement selon la revendication 1, **caractérisée en ce que** les embranchements parallèles (5-9, 30-33, 35-37, 54-57) du trajet de transport (2, 12) sont de nouveau regroupés au niveau de la sortie.

3. Installation de revêtement selon l'une des revendications précédentes, **caractérisée en ce que**, dans chacun des embranchements parallèles du trajet de transport (2, 12) se trouve au moins une station de traitement (13-17) dans laquelle les objets à revêtir (1) sont revêtus d'un produit de revêtement.

4. Installation de revêtement selon l'une des revendications précédentes, **caractérisée en ce que**, dans au moins un embranchement du trajet de transport, avant la station de traitement, se trouve une station d'article.

5. Installation de revêtement selon l'une des revendications précédentes, **caractérisée en ce que** le trajet de transport (2, 12) permet, au moins dans les embranchements parallèles, un transport bidirectionnel des objets à revêtir (1).

6. Installation de revêtement selon l'une des revendications précédentes, **caractérisée en ce que**
a) sur le trajet de transport (2, 12), avant l'embranchement, se trouve un poste de lecture central (28) permettant d'identifier les objets à revêtir (1) qui entrent et
b) dans les embranchements parallèles du trajet de transport (2, 12), ne se trouve aucun poste de lecture supplémentaire.

7. Installation de revêtement selon l'une des revendications précédentes, **caractérisée en ce que**
a) les différentes stations de revêtement sont conçues comme des cabines globalement fermées qui comprennent chacune une entrée de cabine et une sortie de cabine,
b) l'entrée de cabine et/ou la sortie de cabine peut être fermée par une porte, plus particulièrement par une porte roulante.

8. Installation de revêtement selon la revendication 7, **caractérisée en ce que** la porte est sécurisée à l'aide d'un dispositif de fermeture, le dispositif de fermeture pouvant être commandé par une clé, un code PIN, une empreinte digitale ou une carte à code.

9. Installation de revêtement selon l'une des revendications précédentes, **caractérisée par** une conduite circulaire (92) qui alimente les différentes stations de traitement (84-87) en produit de revêtement ou un autre fluide, les stations de revêtement (84-87) étant disposées en ligne.

10. Installation de revêtement selon la revendication 9, **caractérisée en ce que**
a) la conduite circulaire (92) comprend une conduite aller (93) et une conduite retour (94),
b) la conduite aller (93) s'étend globalement en ligne droite le long de la ligne de stations de traitement (84-87),
c) la conduite retour (94) s'étend globalement en ligne droite le long de la ligne de stations de traitement (84-87).

11. Installation de revêtement selon la revendication 10, **caractérisée en ce que**
a) la conduite circulaire (92) comprend, dans chacune des différentes stations de traitement (84-87), une sortie de chaîne porte-câbles (95-98) à laquelle peut être branchée une chaîne porte-câbles pour l'alimentation, afin d'alimenter les appareils des différentes stations de traitement (84-87) en produit de revêtement ou en un autre fluide et
b) la sortie de chaîne porte-câbles (95-98) est disposée au centre dans les différentes stations de traitement (84-87), par rapport à la ligne de stations de traitement (84-87) et/ou par rapport aux différents stations de traitement (84-87).

12. Installation de revêtement selon la revendication 9, **caractérisée en ce que**
a) la conduite aller (93) de la conduite circulaire (92) s'étend en formant des méandres le long de la ligne des stations de traitement (84-87) et autour des différentes stations de traitement (84-87) et
b) la conduite retour (94) de la conduite circulaire (92) s'étend globalement en ligne droite le long de la ligne des stations de traitement (84-87).

13. Installation de revêtement selon la revendication 9, **caractérisée en ce que**
a) la conduite aller (93) de la conduite circulaire (92) s'étend globalement en ligne droite le long de la ligne des stations de traitement (84-87) et
b) la conduite retour (94) de la conduite circulaire (92) s'étend en formant des méandres le long de la ligne des stations de traitement (84-87) et autour des différentes stations de traitement (84-87).

14. Installation de revêtement selon la revendication 12 ou 13, **caractérisée en ce que** la conduite aller (93) ou la conduite retour (94) en forme de méandres forme, entre des stations de traitement (84-87) adjacentes, une boucle de façon à ce que la conduite aller (93) ou la conduite retour (94) en forme de méandres s'étende du même côté de la ligne des stations de traitement (84-87).

15. Installation de revêtement selon la revendication 12 ou 13, **caractérisée en ce que** la conduite aller (93) ou la conduite retour (94) passe, entre des stations de traitement (84-87) adjacentes, d'un côté de la ligne de stations de traitement (84-87) au côté opposé de la ligne de stations de traitement (84-87).
